# EUROPÄISCHE PATENTSCHRIFT

(11) **EP 2 225 824 B1**
(45) Veröffentlichungstag und Bekanntmachung des Hinweises auf die Patenterteilung: **27.07.2016**
(21) Anmeldenummer: 09745514.1
(22) Anmeldetag: 04.05.2009
(51) Int. Cl.: H02M 1/36, H02M 3/158, H02M 3/155, H02M 3/335

(54) **SPANNUNGSWANDLERSCHALTUNG UND VERFAHREN ZUM GETAKTETEN ZUFÜHREN VON ENERGIE ZU EINEM ENERGIESPEICHER**
VOLTAGE TRANSFORMER CIRCUIT AND METHOD FOR FEEDING POWER INTO AN ENERGY ACCUMULATOR IN A PULSED MANNER
CIRCUIT TRANSFORMATEUR DE TENSION ET PROCÉDÉ POUR L'ALIMENTATION SYNCHRONISÉE EN ÉNERGIE DANS UN ACCUMULATEUR D'ÉNERGIE

(30) Priorität: 15.05.2008 DE 102008023515; 15.05.2008 US 120853; 23.06.2008 DE 102008029598
(43) Veröffentlichungstag der Anmeldung: 08.09.2010
(60) Teilanmeldung: 14152059.3
(73) Patentinhaber: Fraunhofer-Gesellschaft zur Förderung der angewandten Forschung e.V., 80686 München (DE)
(72) Erfinder: POLLAK, Markus, 91058 Erlangen (DE); MATEU, Loreto, 90491 Nürnberg (DE); SPIES, Peter, 91074 Herzogenaurach (DE)
(74) Vertreter: Burger, Markus
(86) Internationale Anmeldenummer: PCT/EP2009/003190
(87) Internationale Veröffentlichungsnummer: WO 2009/138180

(56) Entgegenhaltungen:
- JP-A- 2003 111 298
- US-A1- 2005 041 437
- US-A1- 2007 210 774

## Beschreibung

Ausführungsbeispiele gemäß der Erfindung beziehen sich auf eine Spannungswandlerschaltung zum getakteten Zuführen von Energie zu einem Energiespeicher, basierend auf einer Eingangsspannung. Solch eine Spannungswandlerschaltung kann beispielsweise im Zusammenhang mit einer Aufwärtswandlung einer Ausgangsspannung einer Energiequelle, wie z.B. der eines Thermogenerators, einer Brennstoffzelle oder einer Solarzelle eingesetzt werden. Ferner beziehen sich Ausführungsbeispiele gemäß der vorliegenden Erfindung auf ein Verfahren zum getakteten Zuführen von Energie zu einem Energiespeicher.

Das technische Einsatzgebiet von Ausführungsbeispielen gemäß der Erfindung kann beispielsweise eine Spannungswandlerschaltung sein, die bereits bei einer geringen bzw. geringeren Eingangsspannung diese Spannung bezüglich ihres Spannungswertes wandeln kann. Bei Ausführungsbeispielen gemäß der Erfindung kann es sich um einen Aufwärtsspannungswandler mit gekoppelten Spulen handeln, der an seinem Ausgang eine höhere Spannung zur Verfügung stellt, als an seinem Eingang anliegt. Dabei kann der Spannungswandler mit Energiequellen, wie z. B. Thermogeneratoren oder Solarzellen, gekoppelt sein, die nur eine sehr geringe Ausgangsspannung als Eingangspannung für den Spannungswandler liefern. Durch den Einsatz einer erfindungsgemäßen Spannungswandlerschaltung können bei noch geringen Abmessungen des Spannungsübertragers hohe Wirkungsgrade erreicht werden. Das technische Einsatzgebiet kann, wie in weiteren Ausführungsbeispielen der Erfindung dargestellt ist, der Aufbau eines selbstschwingenden Spannungswandlers sein, der bei Betriebsspannungen unterhalb einer Schwellspannung eines Schaltransistors des Spannungswandlers starten kann und dennoch Wirkungsgrade über 70% bei vergleichbaren Schaltungsabmessungen liefern kann. Herkömmliche integrierte DC-DC-Aufwärtswandler können einen geringen Wirkungsgrad haben, wenn sie beispielsweise mit Eingangsspannungen unter 1V arbeiten.

Herkömmliche DC-DC-Aufwärtswandler sind als integrierte Schaltungen erhältlich, die ab einer Eingangsspannung von ca. 300mV arbeiten. Der Wirkungsgrad dieser DC-DC-Aufwärtswandler ist dabei jedoch meist gering. DC-DC-Aufwärtswandler, die bei kommerziellen Geräten wie z. B. Handys, Laptops, usw. eingesetzt werden, sind bis auf mindestens eine externe Spule voll integriert auf einem Chip erhältlich. Sie bieten hohe Wirkungsgrade bei Eingangsspannungen über 1,8 V. Darunter liegende Eingangsspannungen bewirken bei ihnen jedoch meist eine rapide Abnahme der Effizienz. Dies bedeutet, dass Energiequellen, wie z. B. Solarzellen und Thermogeneratoren, kaskadiert verschaltet werden müssen, um eine brauchbare Spannung für einen DC-DC-Konverter bzw. Aufwärtswandler zu liefern. Insbesondere bei den Thermogeneratoren ist dies nur begrenzt möglich, wenn man die Abmessungen des Gesamtsystems gering halten will. Es besteht also ein Bedarf an einer Spannungswandlerschaltung für Energiequellen, die nur eine sehr geringe Ausgangsspannung liefern, wobei diese geringe Ausgangsspannung mit hoher Effizienz in eine geänderte Ausgangsspannung der Spannungswandlerschaltung, bei gleichzeitiger geringer Abmessung, gewandelt werden kann.

Ein selbstschwingender Spannungswandler, der ohne aktive Schaltung zur Ansteuerung des Schalttransistors für die Spannungswandlung auskommt und selbsttätig anschwingt kann beispielsweise bei 300mV arbeiten, jedoch benötigt er zum Anschwingen der Schaltung eine deutlich höhere Eingangsspannung. Diese Startspannung hängt herkömmlicherweise direkt von der Schwellenspannung des Schalttransistors ab, da der Schalttransistor darunter nicht den für den Start erforderlichen Strom führen kann. Die Startspannung hängt außerdem direkt vom Windungsverhältnis des Übertragers der Spannungswandlerschaltung ab, welcher aus der Kopplung der Übertragerspulen gebildet wird. Soll eine Spannungswandlerschaltung so früh, wie möglich starten, ist ein hohes Windungsverhältnis in der Größenordnung von beispielsweise 1:10 notwendig. Dadurch wird beim Hochlauf die geringe Eingangsspannung hochtransformiert, um den Schalttransistor durchzusteuern. Ist die gewünschte Ausgangsspannung erreicht, wird jedoch der Schalttransistor an seinem Steuer (Gate)-Anschluss nahezu mit der um das Windungsverhältnis multiplizierten Ausgangsspannung des Wandlers, beispielsweise also 20 V bei 2 V Ausgangsspannung und einem Windungsverhältnis von 1:10, belastet. Diese auftretenden Steuer(Gate)-Spannungen sind im statischen Betrieb zum Schalten des Transistors nicht notwendig und führen zu hohen Schaltverlusten.

Die US 2005/041437 A1 beschreibt einen DC-DC-Spannungswandler, Dieser umfasst einen Transformator, der mit einer Spannungsquelle und einem selbst-startenden Oszillator gekoppelt ist. Der selbst-startende Oszillator umfasst eine Sekundärwindung des Transformators, einen Kondensator und einen ersten Schalter, der geschaltet ist, um Strom von der Gleichspannungsquelle durch die Primärwicklung des Transformators zu leiten. Der erste Schalter ist ein im Ruhezustand geschlossener Schalter. Der DC-DC-Wandler umfasst weiterhin einen zweiten Schalter, der geschaltet ist, um Strom in einem zu dem ersten Schalter parallelen Pfad zu leiten, Der zweite Schalter ist ein im Ruhezustand offener Schalter, der einen niedrigeren Sättigungswiderstand als der erste Schalter aufweist.

Die JP 2003-111298 A beschreibt eine Stromversorgungsschaltung. Eine Oszillationsschaltung umfasst hierbei einen Transistor und einen Transformator. Die Spannungsversorgungsschaltung transformiert eine Spannung einer Leistungsversorgungsbatterie unter Verwendung eines schaltenden Umwandlungssysterns und lädt eine Lastbatterie oder liefert einen Betriebsstrom zu einer elektronischen Schaltung, die als Last dient. Die Oszillationsschaltung umfasst drei Zener-Dioden, um eine Eingangsspannung und eine Ausgangsspannung zu detektieren. Eine Kontrollschaitung stellt einen Basis-Blas eines Transistors ein, um eine konstante Spannungscharakteristik und eine Überstromschutzfunktion zu erhalten.

Die US 2007/210774 A1 beschreibt eine geschaltete Leistungsversorgungsschaltung, bei der eine Ausgangsspannung basierend auf einer Eingangsspannung bereitgestellt wird. Die Schaltung umfasst eine Ladungspumpensteuerschaltung und einen Aufwärtskonverter. Eine Ausgangsspannung, die unter Verwendung einer Ladungspumpensteuerschaltung erhalten wird, dient als Versorgungsspannung für eine Steuerschaltung eines Aufwärtskonverters.

Es ist Aufgabe der vorliegenden Erfindung eine Spannungswandlerschaltung zu schaffen, die ein gutes Startverhalten und einen guten Wirkungsgrad aufweist.

Es ist ferner Aufgabe der vorliegenden Erfindung, eine Spannungswandlerschaltung zum getakteten Zuführen von Energie zu einem Energiespeicher, basierend auf einer Eingangsspannung zu schaffen, wobei das getaktete Zuführen von Energie mit hoher Effizienz und schon bei einer vergleichsweise geringen Eingangsspannung durchführbar ist.

Ferner ist es die Aufgabe der vorliegenden Erfindung ein Verfahren zum getakteten Zuführen von Energie zu einem Energiespeicher basierend auf einer Eingangsspannung, die an einem Eingang einer Spannungswandlerschaltung anliegt, zu schaffen.

Diese Aufgabe wird gelöst durch eine Spannungswandlerschaltung gemäß Anspruch 1 und durch ein Verfahren gemäß Anspruch 14.

Die vorliegende Erfindung schafft eine Spannungswandlerschaltung zum getakteten Zuführen von Energie zu einem Energiespeicher, basierend auf einer Eingangsspannung, die an einem Eingang der Spannungswandlerschaltung anliegt. Die Spannungswandlerschaltung umfasst einem Energiespeicher und eine Schalteranordnung mit einem Steueranschluss. Die Schalteranordnung ist mit dem Energiespeicher gekoppelt. Ferner weist die Spannungswandlerschaltung eine Rückkopplungsschaltung auf, um ein Rückkopplungssignal bereitzustellen. Die Rückkopplungsschaltung umfasst ein schaltbares Kopplungselement, um das Rückkopplungssignal zu dem Steueranschluss zu koppeln, wobei das schaltbare Koppelelement in einer Startphase der Spannungswandlung eine stärkere Kopplungswirkung bereitstellt, als nach der Startphase.

Ausführungsbeispiele gemäß der hier vorgestellten Erfindung ermöglichen in einem selbstschwingenden DC-DC-Aufwärtswandler eine niedrige Startspannung bei gleichzeitig hohem Wirkungsgrad der Gesamtanordnung. Durch die geringe Anzahl an Bauteilen kann sie außerdem in diskret aufgebauten DC-DC-Konvertern eingesetzt werden.

Die vorliegende Erfindung schafft ferner eine Spannungswandlerschaltung zum getakteten Zuführen von Energie zu einem Energiespeicher, basierend auf einer Eingangsspannung, die an einem Eingang der Spannungswandlerschaltung anliegt. Die Spannungswandlerschaltung umfasst einen Energiespeicher und eine Schalteranordnung, wobei die Schalteranordnung einen ersten Schalter und einen zweiten Schalter aufweist, die zueinander parallel geschaltet sind. Die Schalteranordnung ist mit dem Energiespeicher gekoppelt. Der erste Schalter weist eine betragsmäßig kleinere Einschaltspannung auf, als der zweite Schalter. Ein Steueranschluss des ersten Schalters ist so beschaltet, dass der erste Schalter in einer Startphase der Spannungswandlerschaltung aktiv ist, um dem Energiespeicher Energie zuzuführen. Ein Steueranschluss des zweiten Schalters ist so beschaltet, dass der zweite Schalter nach der Startphase aktiv ist, um dem Energiespeicher in getakteter Weise Energie zuzuführen.

Die vorliegende Erfindung schafft ferner ein Verfahren zum getakteten Zuführen von Energie zu einem Energiespeicher, basierend auf einer Eingangsspannung, die an einem Eingang einer Spannungswandlerschaltung anliegt. Das Verfahren weist einen Schritt des Zuführens von Energie zu dem Energiespeicher der Spannungswandlerschaltung in einer Startphase durch Aktivieren eines ersten Schalters auf, wobei der erste Schalter eine betragsmäßig kleinere Einschaltspannung aufweist, als ein zweiter Schalter. Ferner weist das Verfahren ein Zuführen von Energie, in getakteter Weise, zu dem Energiespeicher der Spannungswandlerschaltung nach der Startphase durch Aktivieren des zweiten Schalters. Der zweite Schalter ist zu dem ersten Schalter parallel geschaltet und weist eine betragsmäßig größere Einschaltspannung auf, als der erste Schalter.

Des Weiteren schafft die vorliegende Erfindung ein weiteres Verfahren zum getakteten Zuführen von Energie zu einem Energiespeicher, basierend auf einer Eingangsspannung, die an einem Eingang einer Spannungswandlerschaltung anliegt. Das weitere Verfahren weist einen Schritt des Zuführens von Energie in einer schaltbaren Weise zu dem Energiespeicher in Abhängigkeit von einem an einem Steueranschluss einer Schalteranordnung anliegenden Steuersignal auf. Ferner weist das weitere Verfahren ein Bereitstellen eines Rückkopplungssignals mit einer Rückkopplungsschaltung in Abhängigkeit von einer Änderung der in dem Energiespeicher gespeicherten Energie oder in Abhängigkeit von einer Menge der in dem Energiespeicher gespeicherten Energie auf. Das Bereitstellen kann mit einem schaltbaren Koppelelement der Rückkopplungsschaltung erfolgen, wobei das Rückkopplungssignal mit dem Steueranschluss gekoppelt wird. Das schaltbare Koppelelement stellt in einer Startphase eine stärkere Kopplungswirkung bereit als nach der Startphase.

Einige Ausführungsbeispiele gemäß der vorliegenden Erfindung bieten die Möglichkeit, dass der Energiespeicher zum Beispiel induktiv oder kapazitiv mit einer Rückkopplungsschaltung gekoppelt ist, so dass die Spannungswandlerschaltung zu selbstschwingenden Oszillationen anregbar ist, wodurch eine Arbeitsfrequenz des getakteten Zuführens von Energie bestimmt ist.

Einige Ausführungsbeispiele gemäß der vorliegenden Erfindung bieten außerdem den Vorteil, dass mit Hilfe einer Regelschaltung, die mit dem Steueranschluss des zweiten Transistors gekoppelt ist, eine Arbeitsfrequenz des getakteten Zuführens von Energie lastabhängig steuerbar ist.

Einige Ausführungsbeispiele gemäß der vorliegenden Erfindung bieten weiterhin den Vorteil, dass eine Rückkopplungsschaltung, die mit dem Energiespeicher induktiv gekoppelt ist, ein schaltbares kapazitives Element aufweist, welches ausgelegt ist, um in einer Startphase eine stärkere Kopplungswirkung zu bewirken, als nach der Startphase.

Einige Ausführungsbeispiele gemäß der vorliegenden Erfindung bieten den Vorteil, einen selbstschwingenden Spannungswandler bereitzustellen, der bei Betriebsspannungen unterhalb einer Einschaltspannung eines Schalttransistors für den Spannungswandler mit der Wandlung der Spannung starten kann.

Ausführungsbeispiele der vorliegenden Erfindung bieten ferner den Vorteil, dass bei Verwendung eines selbstleitenden Sperrschicht-Feldeffekt-Transistors (Junction-Field-Effect-Transistor, JFET) als erster Schalter und bei Verwendung eines Metall-Oxid-Halbleiter-Feldeffekt-Transistors (Metal-Oxide-Semiconductor-Field-Effect-Transistor, MOSFET) als zweiter Schalter das Wandeln einer Spannung in der Startphase bereits bei einer niedrigen Eingangsspannung durch Aktivieren des selbstleitenden JFETs startet und dass nach der Startphase, durch Aktivieren des MOSFET, das Wandeln eine hohe Effizienz aufweisen kann.

Ausführungsbeispiele gemäß der vorliegenden Erfindung werden nachfolgend Bezug nehmend auf die beiliegenden Zeichnungen näher erläutert. Es zeigen:
- Fig. 1: ein Blockschaltbild einer Spannungswandlerschaltung zum Zuführen von Energie zu einem Energiespeicher gemäß einem Ausführungsbeispiel der vorliegenden Erfindung;
- Fig. 2: einen Schaltplan zu einer Spannungswandlerschaltung mit einem schaltbaren kapazitiven Kopplungselement, wobei das Kopplungselement gemäß einem Ausführungsbeispiel der vorliegenden Erfindung als Starthilfe dient;
- Fig. 3: ein Blockschaltbild einer Spannungswandlerschaltung zum getakteten Zuführen von Energie zu einem Energiespeicher gemäß einem Ausführungsbeispiel der vorliegenden Erfindung;
- Fig. 4: ein weiteres Blockschaltbild einer Spannungswandlerschaltung mit einer Rückkopplungsschaltung, einer Regelschaltung, einer Ausgangskapazität und einem steuerbaren Gleichrichter zwischen dem Energiespeicher und der Ausgangskapazität, gemäß einem weiteren Ausführungsbeispiel der vorliegenden Erfindung;
- Fig. 5: ein Schaltbild einer Spannungswandlerschaltung zum getakteten Zuführen von Energie zu einem Energiespeicher, gemäß einem weiteren Ausführungsbeispiel der vorliegenden Erfindung;
- Fig. 6: Strom-/Spannungsmesskurven an verschiedenen Schaltkreispunkten der Spannungswandlerschaltung aus Fig. 3;
- Fig. 7: weitere Strom-/Spannungsmesskurven zu Beginn der getakteten Betriebsphase der Spannungswandlerschaltung gemäß Fig. 3;
- Fig. 8: eine graphische Darstellung eines getakteten Spannungsverlaufs an den Steueranschlüssen des ersten und zweiten Schalters, sowie an der ersten Spule und des entsprechenden Stroms in dem zweiten Transistor, während einer Betriebsphase der Spannungswandlerschaltung;
- Fig. 9: gemessene Strom-/Spannungsmesskurven der Ausgangsspannung, der Steuerspannung, sowie eine graphische Darstellung des getakteten Stromverlaufs über den zweiten Schalter und über eine gleichrichtende Diode, gemäß dem Ausführungsbeispiel in Fig. 3;
- Fig. 10: ein Flussdiagramm eines Verfahrens zum getakteten Zuführen von Energie zu einem Energiespeicher, gemäß einem Ausführungsbeispiel der vorliegenden Erfindung; und
- Fig. 11: ein Flussdiagramm eines weiteren Verfahrens zum getakteten Zuführen von Energie zu einem Energiespeicher gemäß einem weiteren Ausführungsbeispiel der vorliegenden Erfindung.

Bezüglich der nachfolgenden Beschreibung der Ausführungsbeispiele der vorliegenden Erfindung sollte beachtet werden, dass in den unterschiedlichen Figuren und in der gesamten Beschreibung für funktional identische bzw. gleich wirkende oder funktionsgleiche, äquivalente Elemente oder Schritte zur Vereinfachung durchgehend die gleichen Bezugszeichen verwendet werden.

Bei Ausführungsbeispielen gemäß der vorliegenden Erfindung können Spannungswandlerschaltungen für sehr niedrige Eingangsspannungen mit hoher Effizienz realisiert werden. Ein Vorteil dieser Schaltungen sind die kleinen Abmessungen, so dass auf einfache Art und Weise beispielsweise Thermogeneratoren zur Energiegewinnung im µW- bis mW-Bereich verwendet werden können.

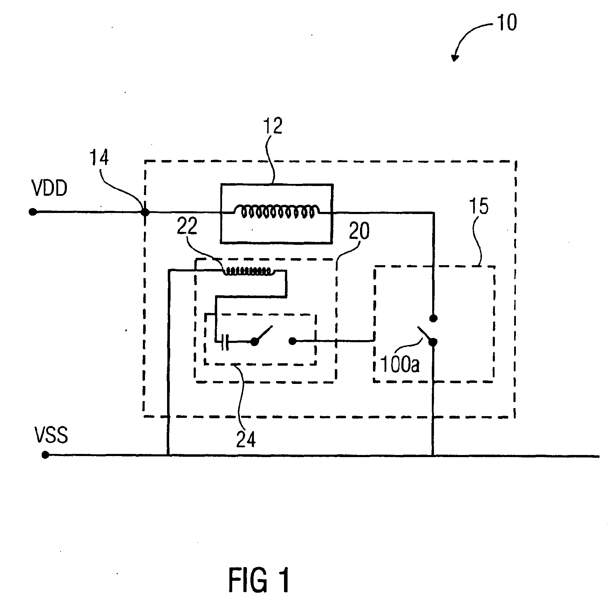

Fig. 1 zeigt ein Blockschaltbild eines Ausführungsbeispiels einer Spannungswandlerschaltung 10 gemäß der vorliegenden Erfindung. Die Spannungswandlerschaltung 10 zum getakteten Zuführen von Energie zu einem Energiespeicher 12, basierend auf einer Eingangsspannung VDD, die an einem Eingang 14 der Spannungswandlerschaltung 10 anliegt, weist einen Energiespeicher 12 zum Speichern von Energie und eine Schalteranordnung 15 mit einem Steueranschluss 100a auf. Die Schalteranordnung 15 ist mit dem Energiespeicher 12 gekoppelt, um dem Energiespeicher in Abhängigkeit von einem an dem Steueranschluss anliegenden Steuersignal in schaltbarer Weise Energie zuzuführen. Die Spannungswandlerschaltung 10 weist ferner eine Rückkopplungsschaltung 20 auf, die ausgebildet ist, um in Abhängigkeit von einer Änderung der in dem Energiespeicher 12 gespeicherten Energie oder in Abhängigkeit von einer Menge der in dem Energiespeicher gespeicherten Energie ein Rückkopplungssignal bereitzustellen. Die Rückkopplungsschaltung 20 weist ferner ein schaltbares Kopplungselement oder Koppelelement 24 auf, das ausgelegt ist, um das Rückkopplungssignal zu dem Steueranschluss 100a der Schalteranordnung zu koppeln. Das schaltbare Koppelelement 24 ist ausgelegt, um in einer Startphase der Spannungswandlung eine stärkere Kopplungswirkung bereitzustellen als nach der Startphase.

Das Ausführungsbeispiel in Fig. 1 basiert auf der Erkenntnis, dass in einer Startphase, also wenn der Spannungswandler anschwingt, eine geringere Spannung am Eingang des Spannungswandlers zur Verfügung stehen kann, als nach der Startphase. Mit Hilfe des schaltbaren Kopplungselementes der Rückkopplungsschaltung kann deshalb in der Startphase der Spannungswandlung eine stärkere Rückkopplung bereitgestellt werden, so dass bereits bei einer niedrigen Eingangsspannung ein Steuersignal an den Steueranschluss der Schalteranordnung gekoppelt werden kann und dem Energiespeicher in schaltbarer Weise Energie zugeführt werden kann. Nach der Startphase kann am Eingang der Spannungswandlerschaltung eine höhere oder eine hohe Spannung anliegen und die Kopplungswirkung des schaltbaren Kopplungselementes kann reduziert sein, um so beispielsweise ein Übersteuern der Schalteranordnung zu vermeiden.

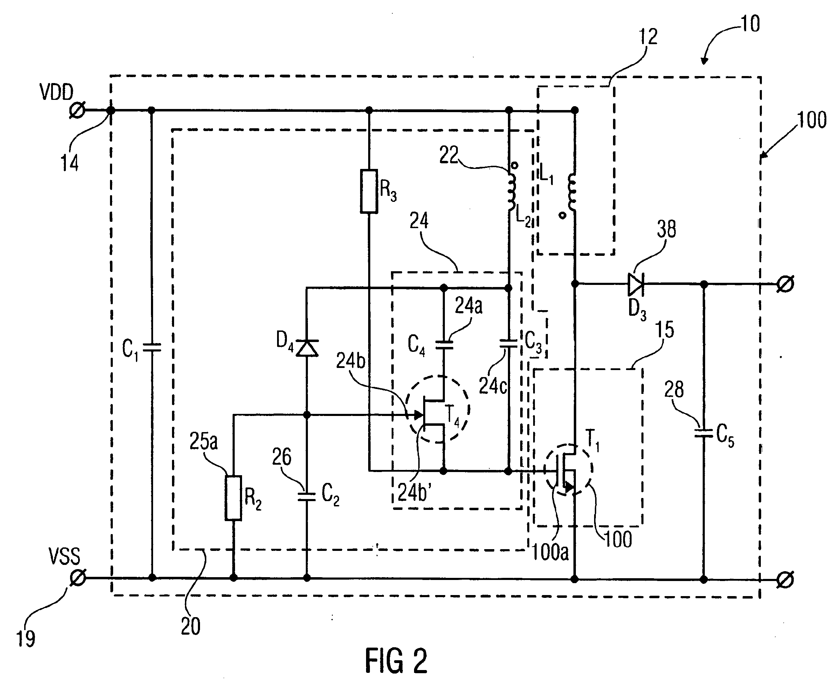

Beispielsweise kann das schaltbare Kopplungselement 24 zwei parallel geschaltete Kapazitäten (24a, 24c) (Fig.2) aufweisen, wobei eine der Kapazitäten über den Starthilfeschalter mit dem Steueranschluss 24b' schaltbar ist. In einer Startphase zum Betreiben des Spannungswandlers kann dann die Kapazität des schaltbaren Kopplungselementes 24 durch Schließen eines Starthilfeschalters 24b vergrößert werden, um damit eine kapazitive Kopplung zu erhöhen und in einer Betriebsphase, nach der Startphase, kann der Starthilfeschalter geöffnet werden und die kapazitive Kopplung damit reduziert werden.

Fig. 2 zeigt einen Schaltplan für einen Spannungswandler gemäß einem weiteren Ausführungsbeispiel der vorliegenden Erfindung. Bei dem Spannungswandler kann es sich um einen selbstschwingenden Spannungswandler handeln, der keine aktive Ansteuerungsschaltung des Schalttransistors bzw. Schalters 100 aufweist. Die Spannungswandlerschaltung 10 mit dem Eingang 14, an dem eine Eingangsspannung VDD angelegt werden kann, weist einen Energiespeicher 12 auf. An dem Eingang 14 der Spannungswandlerschaltung kann eine Eingangsspannung VDD anliegen, die durch die Potentialdifferenz des Referenzpotentials VSS und dem Versorgungspotential, das am Eingang 14 anliegt, gegeben ist. Zwischen dem Versorgungspotential am Eingang 14 und dem Referenzpotential VSS 19 kann in diesem Ausführungsbeispiel ein Eingangskondensator C₁ bw. 18 gekoppelt sein.

Der Energiespeicher 12 kann als ein induktives Element, beispielsweise als eine (Induktions-)Spule ausgebildet sein. Diese Induktionsspule 12 kann mit einem induktiven Element 22 der Rückkopplungsschaltung 20 induktiv gekoppelt sein. Die Induktionsspule 12 und das induktive Element 22 können beispielsweise Teil eines Übertragers sein. Ein zeitlich veränderlicher Stromfluss durch die Spule 12 bzw. L₁ erzeugt eine Induktionsspannung in dem induktiven Element 22 bzw. L₂. Das induktive Element 12 kann mit dem Eingang 14 gekoppelt sein und kann durch die induzierte Induktionsspannung ein höhere Spannung als eine Eingangspannung an einem Anschluss, der mit einem schaltbaren Kopplungselement 24 verbunden ist, zur Verfügung stellen. Die induzierte Spannung kann also als das Rückkopplungssignal dienen. Die Rückkopplungsschaltung 20 weist ferner ein schaltbares Kopplungselement 24 auf.

In diesem Ausführungsbeispiel kann das schaltbare Kopplungselement, das als Starthilfe für den Spannungswandler dienen kann, ein schaltbares kapazitives Kopplungselement mit zwei parallel verschalteten Kondensatoren C₄ und C₃ umfassen. Der Kondensator C₄ kann mit Hilfe des Starthilfeschalters 24b, der hier als n-Typ JFET Transistor ausgebildet ist, während einer Startphase zugeschaltet sein. Seine Kapazität trägt also wirksam zur Gesamtkapazität des schaltbaren kapazitiven Kopplungselementes 24 bei, während er nach der Startphase durch Öffnen des Schalters 100 bzw. Sperren des JFETs nicht oder nur reduziert zur Gesamtkapazität und damit zur Kopplung beiträgt. Somit kann beispielsweise erreicht werden, dass eine Rückkopplung von dem Energiespeicher 12 zu dem Steueranschluss 100a des Schalters 100 in der Startphase stärker ist, als nach Ende der Startphase, und auch nach der Startphase weiterhin eine verringerte Rückkopplung besteht. Dadurch kann beispielsweise erreicht werden, dass der Schalter 100 bereits bei einer am Eingang anliegenden Startspannung, die kleiner ist als eine Einschaltspannung des Schalters 100, aktiv ist, um dem Energiespeicher Energie zuzuführen. Die Startspannung, ab der die Spannungswandlerschaltung startet, um eine am Eingang anliegende Eingangsspannung zu wandeln kann also betragsmäßig kleiner sein, als eine Schwell- bzw. Einschaltspannung des Schalters bzw. Transistors 100. Dies ist allerdings nicht zwingend erforderlich.

Die Schalteranordnung 15 weist einen Schalter 100 auf, der beispielsweise als n-Kanal MOSFET ausgebildet ist. Ein Steueranschluss 100a des Schalters 100 ist dabei mit dem schaltbaren Kopplungselement 24 verbunden bzw. über das schaltbare Kopplungselement 24 mit dem Energiespeicher 12 gekoppelt. Der Steueranschluss 100a wird während des Betriebs des Spannungswandlers so angesteuert, dass dem Energiespeicher 12 in getakteter Weise bzw. in einer schaltbaren Weise Energie zugeführt wird, welche dann in einer Phase in der der Schalter 100 geöffnet ist, über die Diode D3 bzw. 29 auf den Ausgangskondenstor 38 bzw. C₅ übertragen wird. Die dann in Sperrrichtung gepolte Diode D₃ verhindert einen "Rückfluss" der auf dem Ausgangskondensator C₅ gespeicherten Energie, z.B. Ladung, während der Phase, in der der Schalter 100 geschlossen ist und ein Strom durch die Spule 12 von dem Versorgungspotential zu dem Referenzpotential VSS aufgebaut wird. Durch den sich ändernden Strom durch die Spule wird dann eine Spannung in dem induktiven Element 22 induziert.

Die Rückkopplungsschaltung 20 weist in diesem Ausführungsbeispiel weiterhin ein kapazitives Element 26 bzw. C₂ und ein resistives Element 25a bzw. R₂ auf. Eine erste Seite dieses Widerstands-Kapazitätsglieds (RC-Glied aus C₂ und R₂) ist über eine Diode D4 mit dem schaltbaren Kopplungselement 24 und einem Anschluss der Induktionsspule 22 bzw. L₂ verbunden. Eine zweite Seite des Widerstandskapazitätsgliedes ist mit dem Referenzpotential VSS verbunden. Schwingt die Spannungswandlerschaltung an, wird der Kondensator C₂ durch die von dem induktiven Element gelieferte Spannung über die Diode D4 negativ aufgeladen. Die sich an dem Kondensator C₂ aufbauende Spannung kann nach der Startphase, also während der Betriebsphase, so groß sein dass der Starthilfeschalter 24b permanent geöffnet ist bzw. dass in diesem Ausführungsbeispiel der JFET 24b permanent gesperrt ist. Über das resistive Element R3 ist die Eingangsspannung mit dem schaltbaren Kopplungselement 24 verbunden.

Mit Hilfe des schaltbaren Koppelelements 24, welches in einer Startphase eine stärkere Kopplungswirkung zwischen dem Rückkopplungssignal und dem Steueranschluss bereitstellt als nach der Startphase, kann der Schalter 100 schon ab einer Eingangsspannung VDD, die kleiner ist als eine Einschaltspannung des Schalters 100, aktiv sein, um dem Energiespeicher Energie zuzuführen. Der Spannungswandler kann bereits bei einer Startspannung, die am Eingang 14, bezogen auf das Referenzpotential VSS anliegt und die kleiner als eine Einschalt- bzw. Schwellspannung zum Schalten des Schalters 100 ist, starten, die am Eingang anliegende Spannung zu wandeln.

Die Schalteranordnung 15 kann in Ausführungsbeispielen einen Schalter 100 aufweisen, der ausgebildet ist, um dem Energiespeicher in Abhängigkeit von einem an dem Steueranschluss 100a des Schalters 100 anliegenden Steuersignal in schaltbarer Weise Energie zuzuführen. Bei dem Schalter 100 kann es sich beispielsweise um einen Transistor, zum Beispiel um einen Feldeffekttransistor oder einen Bipolartransistor handeln, und bei dem Steueranschluss 100a der Schalteranordnung 15 entsprechend um einen Steueranschluss (Gate-Anschluss oder Basis-Anschluss) des Transistors. Bei dem Schalter kann es sich beispielsweise um einen Metall-Oxid-Halbleiter-Feldeffekt Transistor (MOSFET) handeln, oder um einen Sperrschicht-Feldeffekttransistor.

Der Energiespeicher 12 kann in Ausführungsbeispielen als eine Spule, zur Speicherung oder Zwischenspeicherung von Magnetfeldenergie, ausgebildet sein, und die Rückkopplungsschaltung 20 kann ein induktives Element 22, beispielsweise also ebenfalls eine Spule, aufweisen. Das induktive Element 22 kann magnetisch mit der Spule 12 gekoppelt sein, so dass durch eine Änderung der in der Spule 12 gespeicherten Energie eine Spannung in dem induktiven Element 22 induziert wird. Diese induzierte Spannung kann gemäß Ausführungsbeispielen durch ein schaltbares kapazitives Element 24, welches Teil der Rückkopplungsschaltung 20 sein kann, zu dem Steueranschluss 100a des Schalters 100 gekoppelt werden. Das schaltbare kapazitive Element kann dabei ausgelegt sein, um in einer Startphase eine stärkere Kopplungswirkung zwischen dem induktiven Element 22 und dem Steueranschluss 100a bereitzustellen als nach der Startphase. In anderen Worten kann das schaltbare Kopplungselement als Starthilfe zum Anschwingen des Spannungswandlers 10 dienen. Durch die Rückkopplungsschaltung 20 mit dem schaltbaren kapazitiven Element kann ein Anschwingen des Spannungswandlers bzw. ein Starten der Spannungswandlung bei einer geringeren Startspannung als mit einer Rückkopplungsschaltung ohne dem schaltbaren, kapazitiven Element erzielt werden.

Das schaltbare kapazitive Element 24 kann einen Starthilfeschalter 24b aufweisen, der so beschaltet ist, dass das schaltbare kapazitive Element 24 in der Startphase eine stärkere Kopplungswirkung bereitstellt, als nach der Startphase. Bei dem Starthilfeschalter 24b kann es sich beispielsweise um einen selbstleitenden Transistor handeln, der bereits bei betragsmäßig kleinen Spannungen im leitenden Zustand ist. Der Starthilfeschalter 24b kann also beispielsweise ein Sperrschicht-Feldeffekt-Transistor (JFET) sein.

Gemäß Ausführungsbeispielen kann der Energiespeicher, wie oben bereits erwähnt, als Spule 12 ausgebildet sein, die induktiv mit einem induktiven Element 22 der Rückkopplungsschaltung 20 gekoppelt ist. Durch eine Änderung der in der Spule gespeicherten Energie kann eine selbstschwingende Oszillation in der Spannungswandlerschaltung angeregt werden, die ein getaktetes Übertragen von Energie auf eine Ausgangsseite des Spannungswandlers ermöglicht.

Die Spannungswandlerschaltung kann so ausgebildet sein, dass der Energiespeicher 12 über einen Gleichrichter 38, beispielsweise eine Diode, mit einer Ausgangskapazität 28 gekoppelt ist. Auf der Ausgangskapazität 28 kann eine von dem Energiespeicher übertragene Ladung gespeichert werden, so dass in Abhängigkeit von der übertragenen Ladung eine Ausgangsspannung zur Verfügung gestellt werden kann, die höher sein kann, als eine Eingangsspannung VDD, die an dem Eingang 14 der Spannungswandlerschaltung 10 anliegt.

Der Energiespeicher kann gemäß einem weiteren Ausführungsbeispiel mit der Rückkopplungsschaltung 20 so gekoppelt sein, dass in Abhängigkeit von einer Änderung der in dem Energiespeicher gespeicherten Energie oder in Abhängigkeit von einer Menge der in dem Energiespeicher gespeicherten Energie ein Rückkopplungssignal entsteht, das die Spannungswandlerschaltung zu selbstschwingenden Oszillationen anregt. Das Rückkopplungssignal kann zu dem Steueranschluss des Schalters 100 gekoppelt werden, so dass dadurch ein Steuersignal zur Verfügung gestellt wird, um dem Energiespeicher in schaltbarer bzw. getakteter Weise Energie zuzuführen.

Gemäß Ausführungsbeispielen kann der Starthilfeschalter 24b als Sperrschicht-Feld-Effekt-Transistor ausgebildet sein, dessen Steueranschluss 24b' mit dem Energiespeicher 12 so gekoppelt ist, dass der Starthilfeschalter 24b in der Startphase aktiv ist, um eine stärkere Kopplung zu bewirken, als nach der Startphase. Es ist auch möglich, dass der Starthilfeschalter 24b so beschaltet ist, dass eine Kopplungswirkung des schaltbaren kapazitiven Elements 24 auf den Steueranschluss 100a des Schalters 100, der als Transistor ausgebildet ist, während der Startphase periodisch verändert wird.

In Ausführungsbeispielen kann die Spannungswandlerschaltung 10 ferner ein kapazitives Element 26 aufweisen, welches mit dem Schalter 100 gekoppelt ist, und welches ausgelegt ist, um in Abhängigkeit einer Änderung der Energie in dem Energiespeicher 12 oder der Menge der Energie in dem Energiespeicher ein Potential aufzubauen, das auf ein Ausschalten des Starthilfeschalters 24b hinwirkt. In anderen Worten kann sich also während des Betriebs des Spannungswandlers an einem Kondensator 26, welcher in dem Schaltkreis des Spannungswandlers integriert ist, und welcher mit dem Starthilfeschalter 24b bzw. dem Steueranschluss 24b' des Starthilfeschalters elektrisch verbunden ist, ein Potential aufbauen, so dass an dem Steueranschluss 24b' eine Spannung entsteht bzw. anliegt, die zu einem Öffnen bzw. Abschalten des Starthilfeschalters führt. Falls der Starthilfeschalter als Transistor ausgebildet ist, wird also der elektrische Widerstand zwischen dem Quell- (Source-) Anschluss und dem Ableitungs- (Drain-) Anschluss des Transistors erhöht und ein Stromfluss zwischen den beiden Laststreckenanschlüssen (Drain-Anschluss und Source-Anschluss) reduziert oder gestoppt - der Transistor sperrt also.

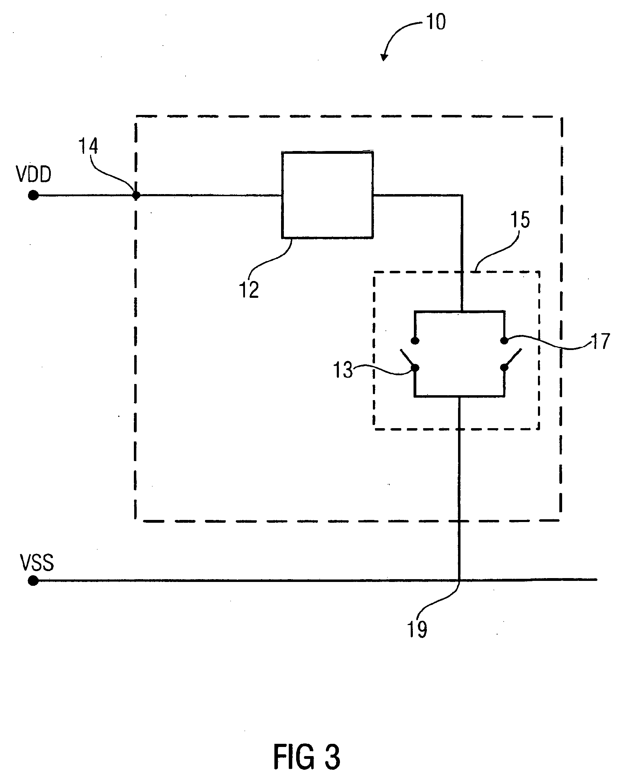

In einem weiteren Ausführungsbeispiel der vorliegenden Erfindung kann die oben beschriebene Schalteranordnung 15 einen ersten Schalter 13 und einen zweiten Schalter 17 aufweisen (siehe Fig. 3,4,5), die zueinander parallel geschaltet sind. Der erste Schalter 13 kann eine betragsmäßig kleinere Einschaltspannung aufweisen, als der zweite Schalter 17. Ein Steueranschluss 13a des ersten Schalters 13 kann so beschaltet sein, dass der erste Schalter in einer Startphase der Spannungswandlerschaltung aktiv ist, also geschlossen ist, um dem Energiespeicher Energie zuzuführen. Ein Steueranschluss 17a des zweiten Schalters 17 kann so beschaltet sein, dass der zweite Schalter nach der Startphase aktiv ist, um dem Energiespeicher 12 in getakteter Weise Energie zuzuführen. In diesem Ausführungsbeispiel weist die Rückkopplungsschaltung 20 ebenfalls ein schaltbares Kopplungselement 24 auf, das ausgelegt ist, um das Rückkopplungssignal, beispielsweise von dem induktiven Element 22 zu dem Steueranschluss 17a des zweiten Schalters 17 zu koppeln. Das schaltbare Koppelelement 24 ist ausgelegt, um in einer Startphase eine stärkere Kopplungswirkung bereitzustellen als nach der Startphase.

Die Funktion des Spannungswandlers 10, welcher in dem Ausführungsbeispiel in Fig. 2 dargestellt ist, kann wie folgt beschrieben werden. Beim Anlegen einer Betriebsspannung an den Spannungswandler oder DC-DC-Wandler ist der n-Typ JFET T₄ bzw. 24b zunächst leitend, da seine Gate-Source-Spannung annähernd bzw. gleich Null ist. Dies bewirkt eine Parallelschaltung aus dem Kondensator C₄ bzw. 24a und dem um Größenordnungen kleineren Kondensator C₃ bzw. 24c. In anderen Worten, eine Kapazität des schaltbaren Rückkopplungskondensators C₄ kann beispielsweise mindestens 10mal größer sein, als eine Kapazität des permanent wirksamen Rückkopplungskondensators C₃. Schwingt die Schaltung an, wird der Kondensator C₂ über die Diode D₄ negativ aufgeladen. Diese Spannung wird im statischen Betrieb so groß, dass der JFET 24b im statischen Betrieb zu jedem Zeitpunkt gesperrt bleibt. Dadurch wird der Kondensator C₄ unwirksam und nur noch der Kondensator C₃ ist aktiv. C₃ bildet praktisch mit den parasitären Kapazitäten am Gate-Anschluss von dem Transistor T₁ bzw. 100 einen Spannungsteiler. Dadurch kann der Kapazitätswert des Kondensators C₃ so optimiert werden, dass die Schaltflanken an dem Transistor T₁ gering gehalten werden können. Der Widerstand R₂ bzw. 25a sorgt dafür, dass der Kondensator C₂ bzw. 26 nach dem Ausschalten des Spannungswandlers wieder entladen wird und somit der JFET T₄ beim Neustart des Wandlers 10 wieder leitend ist.

Gemäß Ausführungsbeispielen können die beiden Spulen 12 und 22 des Übertragers des DC-DC Wandlers beispielsweise, z.B. gemeinsam einen ER9,5-Kern aus dem Ferritmaterial N87 aufweisen. Das Windungsverhältnis der beiden Spulen L₁ und L₂ beträgt in diesem Beispiel 1:8. Als Starthilfeschalter 24b bzw. T₄ kann der JFET PMBF4393 der Firma Philips verwendet werden, der gemäß seinem Datenblatt eine Abschnürspannung zwischen -3,0 V und -0,5 V aufweist. Der Schalttransistor T₁ bzw. 100 kann z.B. der MOSFET NDS335N der Firma Fairchild sein. Die Schwellenspannung dieses MOSFET liegt gemäß seinem Datenblatt bei ungefähr 0,7 V. Die Kapazitätswerte der Kondensatoren C₃ und C₄ können beispielsweise 320 pF und 22 nF betragen. Bei Verwendung dieser Bauelemente kann der Spannungswandler bereits bei 520 mV starten. Würde die Schaltung hingegen alleine mit dem Kondensator C₃ betrieben, also ohne Zuhilfenahme des Kondensators C₄, startete der Wandler erst ab einer Startspannung von 680 mV.

Fig. 3 zeigt ein Blockschaltbild eines weiteren Ausführungsbeispiels einer Spannungswandlerschaltung 10 gemäß der vorliegenden Erfindung. Die Spannungswandlerschaltung 10 zum getakteten Zuführen von Energie zu einem Energiespeicher basierend auf einer Eingangsspannung VDD, die an einem Eingang 14 der Spannungswandlerschaltung 10 anliegt, weist einen Energiespeicher 12 zum Speichern von Energie und eine Schalteranordnung 15 auf, die mit dem Energiespeicher 12 gekoppelt ist. Die Schalteranordnung 15 weist einen ersten Schalter 13 und einen zweiten Schalter 17 auf, die zueinander parallel geschaltet sind und mit dem Energiespeicher gekoppelt sind. Der erste Schalter 13 weist eine betragsmäßig kleinere Einschaltspannung auf, als der zweite Schalter 17. Ein Steueranschluss 13a des ersten Schalters ist dabei so beschaltet, dass der erste Schalter in einer Startphase der Spannungswandlerschaltung aktiv ist, um dem Energiespeicher Energie zuzuführen. Ein Steueranschluss 17a des zweiten Schalters 17 ist so geschaltet, dass der zweite Schalter nach der Startphase aktiv ist, um den Energiespeicher in getakteter Weise Energie zuzuführen.

Bei dem Energiespeicher 12 kann es sich beispielsweise um ein induktives Element, also z. B. eine Induktionsspule handeln. Beim Anlegen einer Eingangsspannung VDD an dem Eingang 14 der Spannungswandlerschaltung 10 kann dann beispielsweise in einer Startphase der erste Schalter 13 aktiv sein, also geschlossen sein, so dass ein zeitlich veränderlicher Strom, also beispielsweise ein zeitlich zunehmender Strom durch die Spule von dem Eingang 14 zu einem Referenzpotential VSS fließt und damit eine in einem Magnetfeld der Spule gespeicherte Energie ansteigt. Nach einer Startphase kann dann der Steueranschluss 17a des zweiten Schalters 17 aufgrund einer entsprechenden Beschaltung so angesteuert werden, dass der zweite Schalter 17 in getakteter Weise geschlossen und geöffnet wird. In den Phasen, in denen der zweite Schalter 17 geschlossen ist, können ebenfalls durch einen veränderlichen Stromfluss durch die Spule 12, dieser Spule 12 Magnetfeldenergie zugeführt werden. Der Strom kann bei geschlossenen ersten bzw. zweitem Schalter zu dem Referenzpotential VSS, bei dem es sich beispielsweise um ein Massepotential handeln kann, abfließen.

In einem anderen Ausführungsbeispiel kann es sich beispielsweise um eine Spannungswandlerschaltung mit einem kapazitiven Energiespeicher 12 handeln. Diese Spannungswandlerschaltung kann dann beispielsweise in eine Ladungspumpe integriert werden. In Ausführungsbeispielen der vorliegenden Erfindung kann es sich also beispielsweise um eine induktive Wandlerschaltung oder eine kapazitive Spannungswandlerschaltung handeln. Enthält die Spannungswandlerschaltung einen Transformator mit gekoppelten Spulen, kann es sich bei einigen Ausführungsbeispielen der vorliegenden Erfindung auch um einen DC-DC-Wandler handeln.

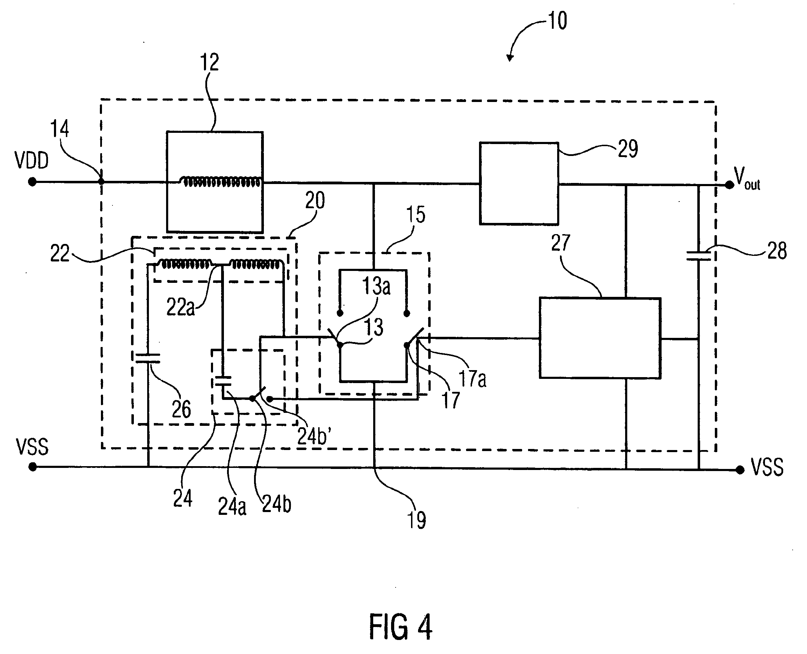

Fig. 4 zeigt ein weiteres Blockschaltbild eines Ausführungsbeispiels einer Spannungswandlerschaltung 10. Die Spannungswandlerschaltung 10 weist einen Energiespeicher 12 auf, der als induktives Element, beispielsweise also eine erste Spule, bzw. erste Induktionsspule ausgelegt sein kann. Diese erste Induktionsspule 12 kann mit einem induktiven Element 22 einer Rückkopplungsschaltung 20 induktiv gekoppelt sein. D. h. durch eine Änderung der in der Induktionsspule gespeicherten Energie, also wenn durch die Induktionsspule 12 ein zeitlich veränderlicher Strom fließt, wird in dem induktiven Element 22 eine Spannung induziert. Die Rückkopplungsschaltung 20 kann ferner ein schaltbares Kopplungselement 24, z.B. ein schaltbares kapazitives Element aufweisen, welches ausgelegt ist, um in einer Startphase eine stärkere Kopplungswirkung zwischen dem induktiven Element 22 und dem Steueranschluss 17a des zweiten Schalters 17 bereitzustellen, als nach der Startphase. Die Rückkopplungsschaltung 20 kann ausgelegt sein, um über das kapazitive Element 24 eine Spannung an den Steueranschluss 17a des zweiten Schalters 17 zu koppeln, so dass der zweite Schalter 17 nach der Startphase aktiv ist bzw. angesteuert wird, um dem Energiespeicher 12, also der Induktionsspule, in getakteter Weise Energie zuzuführen. D. h. durch Anlegen einer über das kapazitive Element 24 eingekoppelten Spannung an den Steueranschluss 17a des zweiten Schalters kann der zweite Schalter beispielsweise geschlossen werden, so dass ein zeitlich veränderlicher Stromfluss durch die Spule 12 zu dem Referenzpotential VSS stattfindet, wodurch der Spule 12 eine magnetische Energie zugeführt wird.

Das schaltbare Kopplungselement, also z.B. das schaltbare kapazitive Element 24 der Rückkopplungsschaltung 20 kann beispielsweise ein Kondensator 24a sein, der in Reihe geschaltet ist mit einem dritten Schalter 24b. Der Steueranschluss des dritten Schalters 24b kann so beschaltet sein, dass der Schalter während der Startphase geschlossen ist, um so eine stärkere Kopplung über den Kondensator 24a zu dem Steueranschluss 17a des zweiten Schalters 17 zu erzielen, als nach einer Startphase, in der der dritte Schalter 24b geöffnet ist. Der Kondensator 24a trennt dabei den Gleichspannungsanteil der induzierten Spannung von dem Steueranschluss 17a des zweiten Schalters 17.

In einem weiteren Ausführungsbeispiel kann die Rückkopplungsschaltung 20 so ausgebildet sein, dass ein Anschluss des induktiven Elementes 22 mit einem weiteren kapazitiven Element 26 der Rückkopplungsschaltung 20 verbunden ist. Das kapazitive Element 26 kann ausgelegt sein, um in der Startphase durch eine induzierte Spannung an dem induktiven Element 22 ein Potential, gegenüber dem Referenzpotential VSS, aufzubauen, so dass der Steueranschluss 13a des ersten Schalters 13, der ebenfalls mit dem induktiven Element 22 gekoppelt ist, so angesteuert wird, dass in der Startphase ein Zuführen von Energie auf die Induktionsspule 12 durch periodisches teilweises Öffnen und Schließen des ersten Schalters 13, vermindert wird, bis nach der Startphase ein Potential an dem kapazitiven Element 26 anliegt, so dass das Zuführen von Energie zu dem Energiespeicher 12 durch Öffnen des ersten Schalters 13 beendet ist.

Bei dem ersten, dem zweiten und dem dritten Schalter kann es sich beispielsweise um Transistoren handeln. Bei dem ersten Schalter 13 kann es sich beispielsweise um einen Sperrschicht-Feld-Effekt-Transistor oder "Junction"- Feldeffekt-Transistor (JFET) handeln, also beispielsweise um einen selbstleitenden Transistor, der bereits bei einer Ansteuerspannung von 0V eingeschaltet, also elektrisch leitend, ist. Der zweite Schalter kann beispielsweise ein Metall-Oxid-Halbleiter-Feldeffekt-Transistor (MOSFET) sein, beispielsweise ein NMOS-Transistor oder auch ein PMOS-Transistor. Bei dem dritten Schalter 24b kann es sich wieder um einen selbstleitenden JFET-Transistor handeln.

Der erste Transistor 13 kann also ein selbstleitender Transistor sein, der bereits bei einer Steuerspannung bzw. Gate-Spannung von 0V stromführend ist, und bei dem zweiten Schalter 17 kann es sich beispielsweise um einen MOSFET mit einer Einschaltspannung handeln, die höher ist als die Einschalt- bzw. Schwellspannung des ersten Transistors 13. In der Startphase der Spannungswandlerschaltung 10 kann nun zunächst nur der erste Transistor, beispielsweise der JFET 13, aktiv sein, da eine an dem Eingang 14 anliegende Spannung gering sein kann. Da der JFET ein selbstleitendes Bauelement ist, kann aber bereits ab einer Eingangsspannung knapp über 0V über die Induktivität 12, also den Energiespeicher, ein Strom fließen. Somit steigt ein Strom über die Induktionsspule 12 bei der Inbetriebnahme des Wandlers an, so dass in der Induktionsspule 12 ein zeitlich veränderlicher Strom fließt und dadurch in dem induktiven Element 22 eine Spannung induziert wird. Durch die induzierte Spannung kann in diesem Ausführungsbeispiel ein negativer Strom in dem induktiven Element 22, das ebenfalls als Spule ausgebildet sein kann, induziert werden, so dass das kapazitive Element 26 mit einer geringen negativen Spannung aufgeladen wird. Da an dem Steueranschluss 13a des JFET-Transistors 13 ein PN-Übergang zu dem Referenzpotential VSS gegeben ist, kann sich im Laufe der Zeit eine geringe negative Spannung an dem kapazitiven Element 26 wegen des Diodengleichrichtungseffekts ausbilden. Zu dem Zeitpunkt, zu dem eine Eingangsspannung VDD konstant wird, wird der Stromfluss in der Induktionsspule 12 konstant oder nimmt eine Änderungsgeschwindigkeit des Stroms ab, wird keine Spannung oder nur noch eine kleinere Spannung in dem induktiven Element 22 induziert. Da der Steueranschluss, also der Gate-Anschluss des JFET-Transistors 13 mit dem kapazitiven Element 26 gekoppelt ist, welches auf einem kleinen negativen Potential liegt, wird der Stromfluss durch den JFET reduziert, der Schalter 13 also geöffnet. Dadurch kann der konstante Stromfluss durch die Induktionsspule 12 reduziert werden. Deshalb kann wieder eine Spannung in die Rückkopplungsschaltung 20, über das gekoppelte induktive Element 22, induziert werden. Dieser Schaltzyklus kann sich nun bei einer konstanten Eingangsspannung wiederholen. Für den Strom, der durch die Induktionsspule 12 fließt, ergibt sich dann ein exponentieller Zusammenhang, mit einer Zeitkonstante, die unter anderem von einem seriellen Ersatzwiderstand der Energiequelle, die die Eingangsspannung 14 liefert, abhängt. Diese Zeitkonstante kann beispielsweise in der Größenordnung von Mikrosekunden sein, weshalb eine hohe negative Spannung in dem induktiven Element 22 induziert werden kann, bis der Stromfluss durch die Induktionsspule 12 seinen maximalen Wert erreicht. Da der Steueranschluss 13a, also der Gate-Anschluss des Sperrschicht-FETS 13, mit dem kapazitiven Element 26 verbunden bzw. gekoppelt ist, wird dann der Sperrschicht-FET wieder geschlossen, was zu einer Reduzierung des Stroms durch die Induktionsspule 12 führt. Der Zyklus kann sich dann wiederholen.

Falls die Spannung über dem kapazitiven Element 26 einen gewissen negativen Wert unterschreitet, also beispielsweise geringer ist, als eine Einschaltspannung des ersten Schalters bzw. des ersten Transistors 13, wird der erste Transistor 13 nicht mehr eingeschaltet und der zweite Schalter 17 bzw. der MOSFET wird zum schaltenden Transistor. Nach der Startphase übernimmt also der zweite Schalter bzw. der MOSFET-Transistor 17 das getaktete Zuführen von Energie zu dem Energiespeicher 12.

Gemäß Ausführungsbeispielen der vorliegenden Erfindung kann der Energiespeicher 12 mit der Rückkopplungsschaltung 20 so gekoppelt sein, so dass in Abhängigkeit einer Änderung der in dem Energiespeicher 12 gespeicherten Energie eine selbstschwingende Oszillation der Spannungswandlerschaltung angeregt werden kann. Der Energiespeicher kann beispielsweise also eine Induktionsspule sein, welche induktiv mit der Rückkopplungsschaltung gekoppelt ist, so dass in Abhängigkeit einer Änderung des in der Induktionsspule fließenden Stromes eine selbstschwingende Oszillation der Spannungswandlerschaltung angeregt wird. Die hier beschriebene DC-DC-Spannungswandlerschaltung ist also in Ausführungsbeispielen vom Grundkonzept her ein selbstschwingender Wandler, d.h. die Schalter bzw. Schalttransistoren werden nicht über eine aktive Schaltung angesteuert, sondern nur über gekoppelte Spulen eines Übertragers.

Gemäß einem Ausführungsbeispiel der vorliegenden Erfindung kann der Energiespeicher 12 mit einer Rückkopplungsschaltung 20 so gekoppelt sein, dass in Abhängigkeit von einer Änderung der in dem Energiespeicher gespeicherten Energie oder in Abhängigkeit von einer Menge der im Energiespeicher gespeicherten Energie ein Rückkopplungssignal entsteht, das die Spannungswandlerschaltung zu selbstschwingenden Oszillationen angeregt. Außerdem kann die Rückkopplungsschaltung 20 ein resistives Element 25a und ein kapazitives Element 26 aufweisen, so dass die Frequenz der selbstschwingenden Oszillation zum getakteten Zuführen von Energie zu dem Energiespeicher unter anderem von einer RC-Zeitkonstante der Rückkopplungsschaltung 20 abhängt.

Die Spannungswandlerschaltung zum getakteten Zuführen von Energie zu einem Energiespeicher kann außerdem eine Regelschleife 27 aufweisen, die ausgebildet ist, um die Frequenz oder ein Tastverhältnis des Zuführens von Energie zu dem Energiespeicher nach der Startphase zu steuern. Dazu kann die Regelschleife 27 mit einem Steueranschluss 17a des zweiten Schalters 17 gekoppelt sein.

Gemäß einem weiteren Ausführungsbeispiel kann die Spannungswandlerschaltung so ausgebildet sein, dass der Energiespeicher 12 über ein gleichrichtendes Element, also z. B. eine Diode, mit einer Ausgangskapazität 28 gekoppelt ist. An der Ausgangskapazität 28 kann dann in Abhängigkeit einer von dem Energiespeicher 12 übertragenen Ladung eine Ausgangsspannung Vₒᵤₜ zur Verfügung gestellt werden. Diese Ausgangsspannung kann in Ausführungsbeispielen höher sein, als eine Eingangsspannung, die am Eingang der Spannungswandlerschaltung anliegt. Bei dem Gleichrichterelement 29 kann es sich um ein geschaltetes Gleichrichtungselement handeln, also beispielsweise um eine Diode, die parallel geschaltet ist mit einem Schalter. Beispielsweise kann es sich bei dem Schalter um einen Transistor handeln, dessen Steueranschluss in einer vorbestimmten Weise beschaltet ist.

Gemäß einigen Ausführungsbeispielen kann das Übertragen von Ladungen auf die Ausgangskapazität 28 so durchgeführt werden, dass nach der Startphase dem Energiespeicher 12 in getakteter Weise durch Schließen des zweiten Schalters 17 Energie zugeführt wird. In einer der getakteten Weise entgegengesetzten Weise können Ladungen von dem Energiespeicher auf die Ausgangskapazität 28 übertragen werden. D. h. nach der Startphase wird während der Phase, in der der Schalter 17 geschlossen ist, Energie in dem Energiespeicher 12 zwischengespeichert. In den (getakteten) Phasen, in denen der Schalter 17 geöffnet ist, wird diese zwischengespeicherte Energie bzw. Ladung über das gleichrichtende Element 29 auf die Ausgangskapazität 28 übertragen. Die Ladungen werden also in einer der getakteten Weise entgegengesetzten getakteten Weise, also zum Beispiel dann, wenn der Schalter 17 geöffnet ist, auf die Ausgangskapazität "gepumpt". Dort kann sich dann eine Ausgangsspannung Vₒᵤₜ an der Ausgangskapazität 28 ausbilden, die sich bezüglich ihres Spannungswertes von dem der Eingangsspannung betragsmäßig unterscheiden kann.

Die Steuerung dieses getakteten Zuführens von Energie in den Energiespeicher 12 und in den entgegengesetzten Phasen, des Übertragens dieser zwischengespeicherten Energie auf die Ausgangskapazität 28 kann durch die Regelschleife 27 unterstützt bzw. ermöglicht oder bewirkt werden. Die Ausgangskapazität 28 wirkt als zweiter Energiespeicher am Ausgang der Spannungswandlerschaltung, so dass eine Ausgangsspannung zur Verfügung steht, die sich von der Eingangsspannung unterscheidet.

Die Regelschleife 27 kann mit einem Steueranschluss des zweiten Schalters 17 gekoppelt sein, um in Abhängigkeit von einer Last an der Ausgangskapazität 28 eine Frequenz für das getaktete Zuführen von Energie auf den Energiespeicher 12 und für das zu dem getakteten Zuführen entgegengesetzt getaktete Übertragen von Ladungen aus dem Energiespeicher auf die Ausgangskapazität 28 zu steuern. Beispielsweise kann in einem Ausführungsbeispiel die Regelschleife so ausgebildet sein, dass die Frequenz zum getakteten Zuführen von Energie und zum Übertragen von Ladungen auf die Ausgangskapazität 28 erniedrigt wird, je höher die Last an der Ausgangskapazität ist. D. h. abhängig von einer Last, die an den Ausgang der Spannungswandlerschaltung, also beispielsweise an die Ausgangskapazität 28, gekoppelt ist, kann die Frequenz der Spannungswandlung verändert werden.

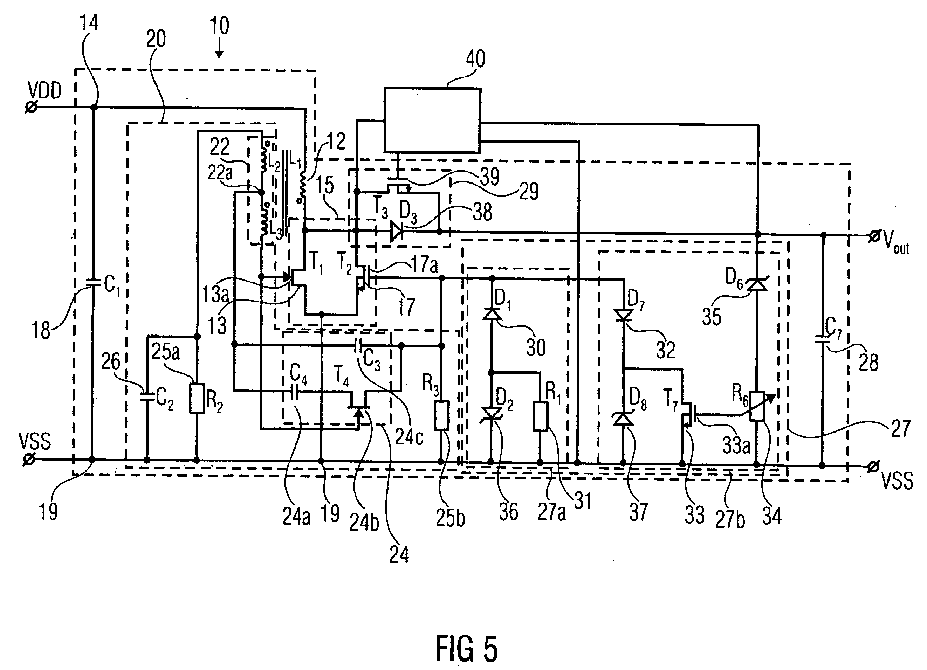

Die Fig. 5 zeigt den Schaltplan einer Spannungswandlerschaltung gemäß einem weiteren Ausführungsbeispiel der vorliegenden Erfindung. Die Spannungswandlerschaltung 10 zum getakteten Zuführen von Energie zu einem Energiespeicher basierend auf einer Eingangsspannung weist in diesem Ausführungsbeispiel einen Energiespeicher 12 auf, der als induktives Element, also beispielsweise als eine erste Spule ausgebildet ist. An den Eingang der Spannungswandlerschaltung 14 liegt eine Eingangsspannung VDD an, die mit dem Energiespeicher 12 verbunden ist. Zwischen der Eingangsspannung VDD und dem Referenzpotential VSS 19 kann in diesem Ausführungsbeispiel ein Eingangskondensator C₁ 18 gekoppelt sein. Der Energiespeicher 12 ist in diesem Ausführungsbeispiel mit der Schalteranordnung 15 verbunden. Die Schalteranordnung 15 weist in diesem Ausführungsbeispiel einen selbstleitenden ersten JFET-Transistor T₁ bzw. 13 auf. Die Schalteranordnung 15 weist außerdem einen zweiten MOSFET-Transistor T₂ bzw. 17 auf, beispielsweise hier einen NMOS-Transistor, der parallel mit dem JFET-Transistor T₁ geschaltet ist. Die parallel geschalteten Transistoren T₁ und T₂ sind mit dem Energiespeicher 12 gekoppelt und mit einem Referenzpotential VSS 19 gekoppelt. Der selbstleitende JFET-Transistor T₁ bzw. 13, der als erster Schalter fungiert, weist eine betragsmäßig kleinere Einschaltspannung auf, als der NMOS-Transistor T₂ bzw. 17. Beispielsweise kann also der JFET-Transistor 13 eine Einschaltspannung bzw. eine Einschaltschwellspannung von 0V aufweisen.

Der Energiespeicher 12 ist in dem gezeigten Ausführungsbeispiel magnetisch bzw. induktiv mit einem induktiven Element 22 an die Rückkopplungsschaltung gekoppelt. Das induktive Element 22 kann in diesem Ausführungsbeispiel aus zwei Induktionsspulen L₃ und L₂ bestehen. Das induktive Element 22 kann über einen Abgriff 22a, der zwischen der zweiten Induktionsspule L₂ und der dritten Induktionsspule L₃ geschaltet ist, mit einem schaltbaren kapazitiven Element 24 verbunden sein. Das schaltbare kapazitive Element 24 besteht in diesem Ausführungsbeispiel aus zwei parallel geschalteten Kondensatoren C3 bzw. 24c und C4 bzw. 24a. Der Zweig mit dem Kondensator 24 bzw. C₄ weist einen JFET-Transistor 24b bzw. T₄ auf, so dass je nach Beschaltung des Kondensators 24b die Gesamtkapazität des kapazitiven Elementes 24 vergrößert werden kann. Der JFET T₄ 24b kann dann so beschaltet sein, dass in einer Startphase der Spannungswandlerschaltung die Gesamtkapazität des kapazitiven Elementes 24 erhöht wird. Das kapazitive Element 24 ist in diesem Ausführungsbeispiel also einerseits mit dem Abgriff 22a des induktiven Elementes 22 verbunden und andererseits mit dem Steueranschluss 17a des NMOS-Transistors T₂. Die Rückkopplungsschaltung 20 weist weiterhin ein kapazitives Element 26 bzw. C₂ und ein resistives Element 25a bzw. R₃ auf. Dieses Widerstands-Kapazitätsglied (RC-Glied aus C₂ und R₃) ist mit einem Anschluss der zweiten Induktionsspule L₂ und dem Referenzpotential VSS verbunden.

Ferner ist ein weiterer Anschluss der dritten Induktionsspule L₃ des induktiven Elementes 22 mit den Steueranschlüssen 13a des JFETS 13 und mit dem Steueranschluss des JFETS 24b des kapazitiven Elementes 24 verbunden.

Die in diesem Ausführungsbeispiel beschriebene Spannungswandlerschaltung 10 kann beispielsweise ein DC-DC-Wandler sein, der vom Grundkonzept her ein selbstschwingender Wandler ist. Das heißt, die Schalttransistoren der Spannungswandlerschaltung brauchen nicht über eine aktive Schaltung angesteuert werden, sondern werden nur über gekoppelte Spulen eines Übertragers angesteuert, so dass sich eine selbst schwingende Oszillation des DC-DC-Wandlers ergibt.

Beim Anlegen einer Eingangsspannung VDD an einem Eingang 14 arbeitet in einer Startphase zunächst der JFET T₁ 13. Da der JFET ein selbstleitendes Bauelement ist, baut sich bereits ab einer Eingangsspannung über 0V in der Induktivität L₁, also dem Energiespeicher 12 des Übertragers ein Strom auf. Da die Eingangsspannung bei Inbetriebnahme des Wandlers ansteigt, steigt auch der Strom durch die Induktionsspule L₁, so dass in der zweiten Induktionsspule L₂ und der dritten Induktionsspule L₃ eine Spannung induziert wird, und der Wandler zu schwingen beginnt. Sobald die Spannung am Abgriff 22a zwischen der zweiten Induktionsspule L₂ und der dritten Induktionsspule L₃ des Übertragers groß genug ist, schaltet der MOSFET-Transistor T₂ bzw. 17 ein und übernimmt die Stromführung in dem Spannungswandler.

Das heißt in einer Startphase ist zuerst der JFET 13 aktiv, d. h. ein Strom fließt durch die erste Spule L₁ über den JFET zu dem Referenzpotential VSS 19. Dadurch wird eine Spannung über das induktive Element 22 in den Rückkoppelschaltkreis 20 gekoppelt. In dieser Startphase kann durch die Verbindung des induktiven Elementes 22 mit dem JFET 24b, des kapazitiven Elementes 24, der Kondensator 24a zu der Kapazität des Kondensators 24c zugeschaltet werden, so dass sich in der Startphase eine stärkere Kopplungswirkung auf den Steueranschluss 17a des zweiten Transistors 17 herstellen lässt, als nach einer Startphase, in der der JFET 24b abgeschaltet ist, so dass die Gesamtkapazität des kapazitiven Elementes 24 reduziert ist.

Durch das Ansteigen des Stromes durch die erste Spule 12 wird in diesem Ausführungsbeispiel ein negativer Strom in das induktive Element 22 induziert, so dass sich an dem kapazitiven Element 26 eine kleine negative Spannung, wegen dem PN-Übergang am Gate-Anschluss 13a des Sperrschicht-FETS 13, der Source-seitig mit dem Referenzpotential VSS verbunden ist, aufbaut. Bei dem Referenzpotential VSS kann es sich beispielsweise um ein Masse- oder Erdungspotential handeln. Der Strom in der Primärspule L₁ bzw. 12 wird dann beispielsweise konstant, wenn die Eingangsspannung stabil bzw. konstant anliegt. Als eine Folge davon ist der Stromfluss durch die Primärspule 12 bzw. L₁ auch konstant und es wird keine Spannung in den Sekundärspulen L₂ und L₃ induziert. Da der Steueranschluss 13a des JFETS 13 über das induktive Element 22 mit dem kapazitiven Element 26 bzw. C₂ verbunden ist und da dieses eine negative Spannung aufweist, wie oben beschrieben wurde, wird der Strom durch den JFET reduziert und damit auch der Stromfluss durch die erste Spule 12. Durch die Änderung des Stromflusses durch die erste Spule 12 wird nun wiederum eine Spannung über das induktive Element 22 in die Rückkopplungsschaltung 20 gekoppelt. Dieser Schaltzyklus kann sich nun bei einer stabilen Eingangsspannung VDD wiederholen, was bedeuten kann, dass ein exponentielles Verhalten für den Stromfluss durch die erste Spule 12, mit einer Zeitkonstante τ, die der Induktivität der ersten Spule 12, dividiert durch den resistiven Wert des JFETs 13 und den Ersatzwiderstand der Quelle der Eingangsspannung für die Spannungswandlerschaltung 10, entsprechen kann, auftreten kann. τ kann in der Größenordnung von Mikrosekunden sein, weshalb eine hohe negative Spannung in dem induktiven Element 22 induziert werden kann, solange bis der Strom durch die erste Spule 12 seinen maximalen Wert erreicht. An diesem Punkt ist der Steueranschluss 13a des JFET 13 mit dem kapazitiven Element 26 gekoppelt und der JFET 13 kann ausgeschaltet werden. Dies bewirkt, das der Stromfluss durch die erste Spule 12 abnimmt, bis der Stromfluss beispielsweise wieder auf null abfällt. Dann kann der Zyklus von neuem beginnen. Wenn die Spannung über dem kapazitiven Element 26 kleiner ist, als die Einschaltschwellspannung des JEFTs, wird der JFET nicht mehr eingeschaltet und der zweite Transistor 17, beispielsweise der NMOS T₂ wird zum Schalttransistor, über den ein Hauptstrom fließt. Das kapazitive Element 26 kann stärker negativ geladen werden und eine Ausgangskapazität 28 kann über die Diode D₃ aufgeladen werden.

In Abhängigkeit einer Änderung der in der Induktionsspule 12 gespeicherten Energie kann also der Spannungswandler zu selbstschwingenden Oszillationen angeregt werden.

Über das kapazitive Element 24 kann eine Spannung an den Steueranschluss 17a des MOSFET-Transistors 17 übertragen werden, so dass dieser bei Erreichen seiner Einschaltspannung die Stromführung übernimmt. Sobald also die Spannung am Abgriff zwischen der Induktionsspule L₂ und der dritten Induktionsspule L₃ der gekoppelten Spulen, also am Abgriff des Übertragers, groß genug ist, schaltet der MOSFET T₂ durch und übernimmt die Stromführung. Dabei wird das kapazitive Element C₂ negativ aufgeladen, so dass im stationären Zustand, also nach der Startphase, an diesem eine konstante negative Spannung anliegt und der JFET T₁ ausgeschalten ist. Der Kondensator 24c und der Kondensator 24a trennen den Gleichspannungsanteil an dem Abgriff 22a von dem Steuer- bzw. Gate-Anschluss des MOSFETs T₂ ab. Eine Arbeitsfrequenz der Spannungswandlerschaltung wird dann weitgehend, nach der Startphase, von dem Kondensator C₃ bzw. 24c und dem resistiven Element 25b bzw. R₃. bestimmt. In Ausführungsbeispielen der vorliegenden Erfindung kann die Arbeitsfrequenz weiterhin durch eine Regelschleife 27 beeinflusst werden, wie im Folgenden dargestellt wird.

Die Regelschleife 27 kann ausgebildet sein, um die Frequenz des getakteten Wandelns einer Eingangsspannung in eine Ausgangsspannung zu steuern. Dazu kann die Regelschleife 27 mit dem Steuer- bzw. Gate-Anschluss 17a des MOSFET-Transistors 17 gekoppelt sein. Das heißt, die Frequenz des Zuführens von Energie zu der ersten Induktionsspule 12 und des Übertragens von Energie bzw. Ladung auf eine Ausgangskapazität 28 des Spannungswandlers 10 kann durch die Regelschleife 27 gesteuert werden. Die Regelschleife 27 ist in diesem Ausführungsbeispiel so ausgelegt, dass in Abhängigkeit einer Last an der Ausgangskapazität 28 eine Frequenz für das getaktete Koppeln und für das Übertragen von Ladung von der ersten Spule auf den Ausgangskondensator 28 gesteuert wird. Der Gate-Anschluss 17a kann dazu an einem Zweig für eine negative Spannungsbegrenzung 27a und einem Zweig für eine positive Spannungsbegrenzung 27b angeschlossen sein. Der Zweig für die negative Spannungsbegrenzung 27a kann eine Diode D₁ bzw. 30 aufweisen, die in Serie mit einem resistiven Element 31 bzw. R₁ gegen das Referenzpotential VSS geschaltet ist. Parallel dazu kann der Zweig für eine positive Spannungsbegrenzung 27b angeordnet sein. Dieser Zweig weist eine Diode 32 auf, die mit einem Transistor 33 in Reihe gegen das Referenzpotential geschaltet ist. Ein Steueranschluss bzw. ein Steuergate 33a des Transistors 33 T₇ kann über einen veränderlichen Widerstand 34 R₆, also beispielsweise ein Potentiometer, das über eine Zenerdiode 35 parallel zur Ausgangskapazität 28 geschaltet ist, angesteuert werden. Durch den Zweig für die positive Spannungsbegrenzung und den Zweig für die negative Spannungsbegrenzung kann also eine Gate-Spannung an dem MOSFET-Transistor T₂ eingestellt bzw. begrenzt werden. Abhängig von einer Last am Ausgang bzw. abhängig von einer gewünschten Ausgangsspannung kann der Widerstand des Potentiometers 34 bzw. eine Spannungsteilerwirkung des Potentiometers 34 verändert werden und damit die Gate-Spannung am Transistor 33. Somit kann in Abhängigkeit einer Last am Ausgang des DC-DC-Wandlers, die Gate-Spannung an dem Steueranschluss 33a des Transistors 33 und die Steuerspannung an dem zweiten Transistor bzw. dem MOSFET 17 eingestellt werden. Durch eine Einstellung eines Kanalwiderstandes des MOSFET 17 kann bei einigen Ausführungsbeispielen eine Zeitkonstante eines Gate-Ansteuersignals des MOSFET T₂ eingestellt werden. Dadurch kann also die Frequenz oder ein Tastverhältnis des Öffnens und Schließens des Transistors 17 und damit des getakteten Zuführens von Energie bzw. des Übertragens von Ladungen auf die Ausgangskapazität 28 eingestellt werden.

Die Regelschleife 27 kann also eine Diode D₇, einen Transistor T₇, eine Zenerdiode D₆ sowie einen Spannungsteiler R₆ aufweisen. Mit dieser Regelschleife kann die Ein-Zeit des Schalttransistors T₂ gesteuert werden. Somit kann sich auch die Betriebsfrequenz bei unterschiedlichen Lasten ändern. Beispielsweise kann die Betriebsfrequenz umso niedriger werden, je höher die Last ist.

Die Zenerdioden 36 und 37 sind Schutzdioden, die beispielsweise im Fehlerfall verhindern, dass der MOSFET T₂ bzw. 17 unzulässig hohe Spannungen an seinem Steuer- bzw. Gate-Anschluss bekommt. Der Widerstand 31 bzw. R₁ dient als zusätzliche Starthilfe für den Wandler.

Zwischen der ersten Induktionsspule 12 und der Ausgangskapazität 28 kann ferner ein schaltbarer Gleichrichter 29 angeordnet sein. Der schaltbare Gleichrichter 29 kann eine Diode 38 aufweisen, die parallel zu einem Transistor T₃ bzw. 39 angeordnet ist, der über eine weitere Regelschaltung 40 beschaltbar ist bzw. angesteuert wird.

Um die Effizienz der Schaltung zu optimieren, wird parallel zu der Diode D₃ bzw. 38 des schaltbaren Gleichrichters 29 ein Transistor 39 geschaltet, der die Stromführung übernimmt, wenn die Diode normalerweise leiten würde. Dies kann beispielsweise über eine Ansteuerschaltung 40 realisiert werden.

Der steuerbare Transistor 39 kann beispielsweise ein PMOS-Transistor sein, der eine ausreichende Totzeit aufweist, also eine ausreichende Zeit, in der er geöffnet ist, so dass es zu keinem Überlapp des PMOS-Transistors T₃ bzw. 39 und des zweiten MOSFET T₂ kommen kann.

Bei einigen Ausführungsbeispielen kann eine hohe Effizienz der Spannungswandlerschaltung durch eine geeignete Auslegung des Übertragers, also der gekoppelten Spulen 12 und 22 erreicht werden. Die Sekundärseite (L₂ und L₃) kann einen Abgriff 22a aufweisen, um den MOSFET-Transistor T₂ optimal zu steuern, das heißt um Schaltverluste zu minimieren und dennoch geringe Startspannungen zu gewährleisten. Die Induktivität der Wicklung der Induktionsspule 12 bzw. L₁ wird bei einigen Ausführungsbeispielen möglichst groß gewählt, damit ein Leerlaufstrom des Wandlers gering im Verhältnis zum maximalen Eingangsstrom gehalten werden kann. Um hohe Wicklungszahlen und damit hohe Ohmsche Verluste zu verhindern, können Kernmaterialien verwendet werden, die eine hohe absolute magnetische Permeabilität µ besitzen. Die absolute magnetische Permeabilität µ ist das Produkt aus der magnetischen Feldkonstante µ₀ und der relativen magnetischen Permeabilität µᵣ (µ = µ₀ x µᵣ). Die absolute magnetische Permeabilität kann in einigen Ausführungsbeispielen größer als 6 x 10⁻⁵ H/m sein, beispielsweise also größer als 6,28 x 10⁻⁵ H/m, was einer relativen magnetischen Permeabilität µᵣ von 50 entspricht. Dabei wird bei einigen Ausführungsbeispielen jedoch darauf geachtet, dass die Sättigung der Magnetisierung des Kerns nicht überschritten wird. Dies hängt in erster Linie von der Ausgangsleistung und letztlich von dem maximalen Eingangsstrom des Wandlers ab.

Gemäß Ausführungsbeispielen der vorliegenden Erfindung kann die oben beschriebene Schaltung für einen DC-DC-Aufwärtswandler ausschließlich aus diskreten Bauteilen aufgebaut sein. Um eine kleine Abmessung der Spannungswandlerschaltung zu ermöglichen, können alle entsprechenden Bauteile durchwegs als oberflächenmontierbare Bauteile (Surface-Mounted-Device = SMD) erhältlich sein. Für den Übertrager, also die Spulen zur induktiven Kupplung, kann beispielsweise ein ER9,5-Kern aus dem Ferritmaterial N87 verwendet werden, der noch geringe Abmessungen im Verhältnis zur Gesamtschaltung besitzt. Damit der Konverter, also die Spannungswandlerschaltung bei geringen Eingangsspannungen von z. B. 60 mV startet, ist zum einen das Wicklungs- bzw. Windungsverhältnis der ersten Induktionsspule L₁ bzw. 12 zu der zweiten Induktionsspule L₂ und der dritten Induktionsspule L₃ ungefähr 1:8,5 zu wählen. Es kann also gelten L1:L2 = L1:L3 = 1:8,5. Das Wicklungsverhältnis bzw. Windungsverhältnis kann jedoch beispielsweise, abhängig von der Einschaltspannung des JFET T₁ bzw. des Transistors T₃ auch zwischen 1:4 und 1:25 liegen. Außerdem besitzt der JFET T₁ eine betragsmäßig niedrige Abschnürspannung von ungefähr 1,2V. Dabei ist darauf zu achten, dass die maximale Gate-Source-Spannung ausreichend hoch dimensioniert ist. In einem Ausführungsbeispiel kann beispielsweise der JFET PMBF4393 der Firma Philips eingesetzt werden. Dieser weist nach Angaben in seinem Datenblatt eine Abschnürspannung zwischen -3,0V und -0,5V und eine maximal zulässige Gate-Source-Spannung von 40V auf. In einigen Ausführungsbeispielen kann als Schalttransistor T₂ der MOSFET BSH105 von der Firma Philips verwendet werden. Die Schwellspannung dieses Schalttransistors liegt bei ungefähr 0,6V. Werden die angegebenen Schalttransistoren verwendet, ist es bei einigen Ausführungsbeispielen sinnvoll, die zweite Induktionsspule L₂ und die dritte Induktionsspule L₃ genau gleich groß zu dimensionieren.

Die Spannungswandlerschaltung 10 in Fig. 5 kann in einem weiteren Ausführungsbeispiel eine Schutzschaltung aufweisen, die mit dem Steueranschluss 17a des zweiten Schalters 17 gekoppelt ist um den Steueranschluss des zweiten Schalters gegen eine Überspannung zu schützen. Bei der Schutzschaltung kann es sich um zwei entgegengesetzt gekoppelte bzw. gepolte Zenerdioden 36 und 37 handeln, die beispielsweise in der gezeigten Weise geschaltet sind.

In Ausführungsbeispielen der vorliegenden Erfindung kann der Steueranschluss 17a des zweiten Schalters 17 an eine Regelschaltung oder Regelschleife 27 gekoppelt sein, wobei die Regelschleife ausgelegt ist, um die Frequenz des getakteten Zuführens von Energie zu dem Energiespeicher und einer Übertragung einer Ladung von dem Energiespeicher auf eine mit dem Energiespeicher gekoppelte Ausgangskapazität 28 zu steuern. An der Ausgangskapazität 28 steht dann eine Ausgangsspannung Vₒᵤₜ zur Verfügung. Die Regelschleife 27 kann dazu eine positive und eine negative Strombegrenzung bzw. Spannungsbegrenzung aufweisen, wobei die Spannungsbegrenzung in Abhängigkeit einer Last oder in Abhängigkeit einer Ausgangsspannung die positive und/oder die negative Strombegrenzung bzw. Spannungsbegrenzung so verändern kann, dass die Einschaltspannung des zweiten Schalters 17 unter- oder überschritten wird. In anderen Worten, es kann also in Abhängigkeit der Last der zweite Schalter 17 ein- und ausgeschaltet werden.

Die Schalteranordnung 15 mit dem zueinander parallel verschalteten ersten und zweiten Schalter kann so ausgelegt sein, dass die Schalteranordnung in der Startphase der Spannungswandlung bzw. der Spannungswandlerschaltung eine Einschaltspannung zwischen 0V und 100mV aufweist und nach der Startphase über den zweiten Schalter aktiv ist, so dass dieser Strompfad einen geringeren Widerstand aufweist, als ein Strompfad über den ersten Schalter T₁. In Ausführungsbeispielen der vorliegenden Erfindung kann es sich deshalb bei dem ersten Schalter um einen selbstleitenden Transistor handeln und bei dem zweiten Schalter um einen selbstsperrenden Transistor. Beispielsweise kann also der erste Schalter ein JFET sein und der zweite Schalter ein MOSFET. Beispielsweise kann der erste Schalter 13 aber auch ein N-Kanal-FET vom Verarmungstyp sein, während der zweite Schalter 17 ein N-Kanal-FET vom Anreicherungstyp ist. Der erste Schalter 17 kann beispielsweise ein N-Kanal-MOSFET mit einer betragsmäßig kleineren Einschaltspannung bzw. Schwellspannung sein, während der zweite Schalter einen N-Kanal-MOSFET mit einer betragsmäßig größeren Schwellspannung aufweist. Denkbar ist aber auch, dass in Ausführungsbeispielen Transistoren mit einer entsprechend umgekehrten Dotierung zum Einsatz kommen. Verschiedene Einschaltspannungen können beispielsweise durch unterschiedliche Dotierungsprofile, durch unterschiedlich dicke Gate-Oxide oder durch andere Entwurfsparameter der Feldeffekttransistoren (FET) erzielt werden.

In einem anderen Ausführungsbeispiel der vorliegenden Erfindung kann die Spannungswandlerschaltung ferner eine Rückkoppelschaltung 20 aufweisen, die ausgebildet ist, um in Abhängigkeit von einer Änderung der in dem Energiespeicher 12 gespeicherten Energie oder in Abhängigkeit von einer Menge der in dem Energiespeicher gespeicherten Energie ein Rückkopplungssignal bereit zu stellen. Die Rückkoppelschaltung 20 kann ein schaltbares Kopplungselement 24 aufweisen, das ausgelegt ist, um das Rückkopplungssignal zu dem Steueranschluss 17a des zweiten Schalters 17 zu koppeln, wobei der schaltbare Koppelelement 24 ausgelegt ist, um in einer Startphase eine stärkere Kopplungswirkung bereitzustellen als nach der Startphase.

Gemäß einem weiteren Ausführungsbeispiel der vorliegenden Erfindung kann die Schalteranordnung 15 so ausgebildet sein, dass in einer Startphase die erste Spule 12 über den ersten Schalter bzw. über den ersten Transistor 13 mit dem Referenzpotential VSS koppelbar ist, so dass ein Stromfluss durch die erste Spule 12 stattfinden kann und eine Spannung in die Rückkoppelschaltung 20 induziert werden kann. Nach der Startphase, wenn also beispielsweise der erste Schalter 13 permanent geöffnet ist, oder auch schon während der Startphase kann durch Schließen des zweiten Schalters 17 ein Stromfluss durch die Spule erzeugt bzw. ermöglicht werden, so dass eine Spannung in die Rückkopplungsschaltung 20 induziert werden kann.

Die Spannungswandlerschaltung kann als Spannungswandler ausgelegt sein, der an einem Ausgang eine Ausgangsspannung Vₒᵤₜ zur Verfügung stellt. Der Spannungswandler kann einen Ausgangskondensator zum Zwischenspeichern von Ladung, also Energie, aufweisen. Der Spannungswandler kann also so ausgebildet sein, dass der zweite Schalter 17 nach der Startphase ein getaktetes Koppeln der Spule mit dem Referenzpotential ermöglicht, wodurch ein Strom durch die Spule fließt, der der Spule magnetische Energie zuführt, die dann in einer der getakteten Kopplung entgegen gesetzt getakteten Phase in Form von Ladungen von der Spule 12 auf den Ausgangskondensator 28 übertragen wird. Dazu kann zwischen der Spule 12 und der Ausgangskondensator 28 ein gleichrichtendes Element, beispielsweise eine Diode oder ein schaltbares gleichrichtendes Element 29, gekoppelt sein. Der Ausgangskondensator 28 kann über das schaltbare gleichrichtende Element 29 aufgeladen werden.

Die Rückkopplungsschaltung 20 kann so ausgebildet sein, dass das kapazitive Element 26 bzw. C₂ dazu verwendet wird, den ersten Schalter bzw. den Sperrschicht-FET abzuschalten. Das heißt, falls eine Spannung über dem kapazitiven Element 26 geringer ist als eine Einschalt- bzw. Schwellspannung des ersten Schalters T₁ bzw. des ersten Sperrschicht-FETs wird dieser dauerhaft ausgeschaltet, und der zweite Transistor T₂, der beispielsweise ein NMOS-Transistor sein kann, wird zum aktiven Schalttransistor. Das kapazitive Element 26 kann dann weiter negativ aufgeladen werden.

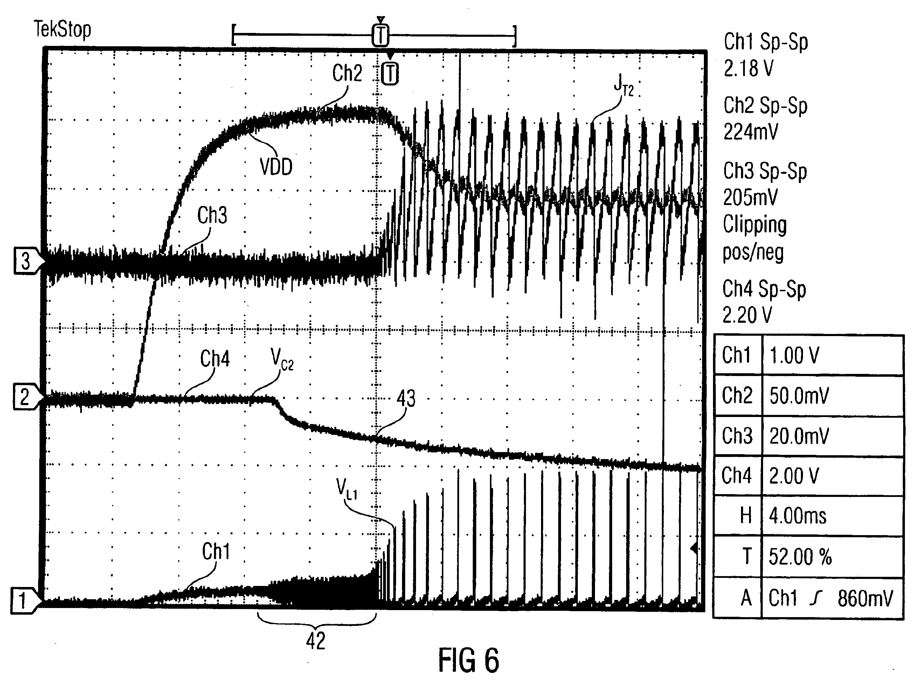

In Fig. 6 sind die gemessenen Strom-/Spannungsverläufe an unterschiedlichen Messpunkten der Spannungswandlerschaltung aus Fig. 5 dargestellt. Auf der x-Achse des Diagramms ist die Zeit in Millisekunden aufgetragen, wobei ein Intervall 4ms entspricht. Auf der y-Achse ist die Eingangsspannung VDD dargestellt, der Strom durch den zweiten Schalter I_{T2} sowie die Spannung V_{L1} an der ersten Spule 12 und die Spannung V_{C2} an dem kapazitiven Element 26 der Rückkopplungsschaltung 20. In dem Diagramm sind Strom- und Spannungswerte beginnend mit der Startphase, bis nach der Startphase, also in der Betriebsphase der getakteten Wandlung der Eingangsspannung, dargestellt. Wie der Kurve VDD zu entnehmen ist, steigt die Eingangsspannung nach dem Einschalten erst eine gewisse Zeit an, so dass in dieser Zeit ein zeitlich veränderlicher Strom über den elektrisch leitenden ersten Transistor T₁ zu dem Referenzpotential fließen kann, so dass eine Spannung in die Rückkoppelschaltung 24 induziert werden kann und sich, wie oben beschrieben und in der Messkurve V_{C2} zu sehen ist, an dem kapazitiven Element 26 eine negative Spannung aufbaut. Diese negative Spannung führt, nachdem die Eingangsspannung VDD konstant geworden ist oder eine zeitliche Veränderung des Stroms durch die erste Spule ausreichend klein geworden ist, dazu, dass an dem Gate-Anschluss 13a des ersten Transistors T₁ ein negatives Potential von dem kapazitiven Element 26 anliegt und der erste Transistor damit ausgeschaltet wird. Deshalb kommt es dann zu einer Reduktion des Stromes in der ersten Spule 12, was in der Spannungskurve V_{L1} in dem Bereich 42 zu sehen ist. Die Abnahme des Stroms in der Spule führt wieder zu einer Spannungsinduktion und der Zyklus kann wieder neu starten. Das heißt, die Spannung an der ersten Spule 12 oszilliert, wie in dem Ausschnitt 42 zu sehen ist. Sobald die Spannung in dem kapazitiven Element 26 bzw. C₂ die Abschnür- bzw. Schwellspannung des ersten Transistors T₁ oder eine Spannung, die ein dauerhaftes Abschnüren des ersten Transistors T₁ bewirkt, erreicht hat, wird der Transistor T₁ ausgeschaltet und der zweite Transistor T₂ übernimmt die Stromführung, wie man in der Stromkurve I_{T2} sieht. Wie oben beschrieben ist, kommt es nach der Startphase zu einer selbstschwingenden Oszillation aufgrund der Rückkopplungsschleife 24, d. h. durch den Schalter T₂ wird der Induktionsspule in getakteter Weise Energie zugeführt. In diesem Diagramm wird dies durch den oszillierenden Strom I_{T2}, der durch das Ein- und Ausschalten des Transistors 17 hervorgerufen wird, verdeutlicht. Als eine Konsequenz bildet sich an der Induktionsspule ebenfalls ein oszillierendes Spannungsverhalten aus, wie in Fig. 6 in der Spannungskurve V_{L1} zu sehen ist.

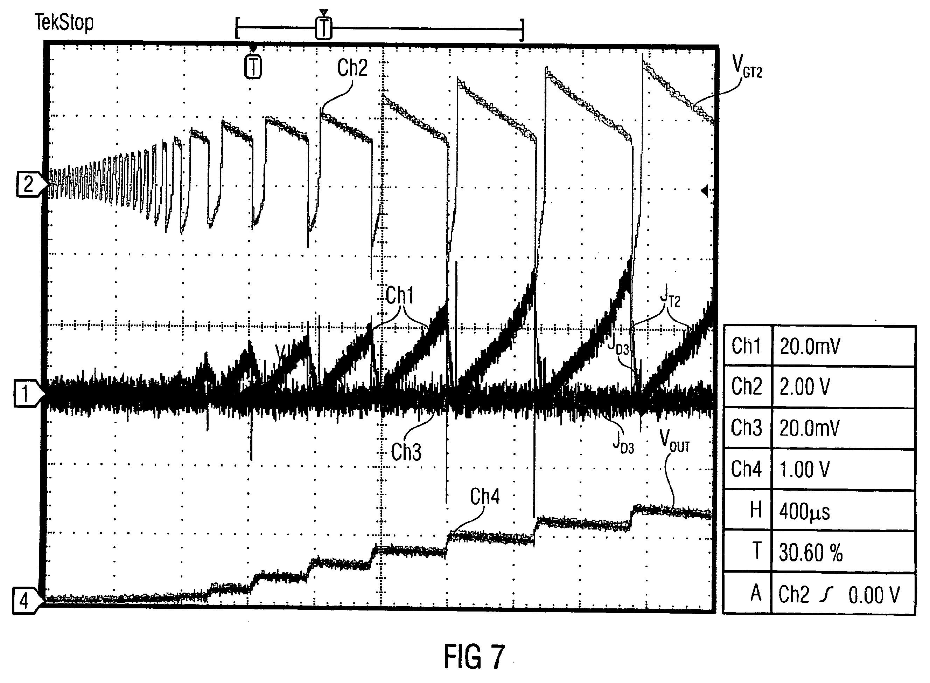

Fig. 7 zeigt die Messkurven einer Steuer- bzw. Gate-Spannung V_{GT2}, den Strom I_{T2} in den stromführenden Kanal des zweiten Transistors, sowie einen Strom durch die Diode D3, welcher in der Kurve I_{D3} dargestellt ist. Weiterhin ist die Ausgangsspannung Vₒᵤₜ, die an der Ausgangskapazität 28 zur Verfügung steht, dargestellt. Die Zeitskala für diese Messungen beträgt, wie der Fig. 7 zu entnehmen ist, 400µs pro Intervalleinheit. Die Strom- und Spannungswerte in Fig. 7 sind in der Startphase, in der der zweite Transistor T₂ die Stromführung übernimmt, dargestellt. Dementsprechend baut sich die Ausgangsspannung Vₒᵤₜ erst schrittweise auf. In den unterschiedlichen Messkurven ist das getaktete Wandeln gut erkennbar. In den Phasen, in denen der zweite Transistor eingeschaltet ist, also eine höhere Spannung als die Einschaltspannung an dem Steueranschluss des zweiten Transistors anliegt, fließt ein signifikanter Strom I_{T2} durch den Transistor. Nach dem Unterschreiten der Einschaltspannung an dem Gate des zweiten Transistors stoppt der Stromfluss durch den zweiten Transistor abrupt, wie in der Kurve I_{T2} zu sehen ist. In der Phase, in der der zweite Transistor T₂ ausgeschaltet ist, wird dann, wie man am Kurvenverlauf I_{D3} sehen kann, die in der ersten Spule 12 gespeicherte Energie bzw. Ladung über den steuerbaren Gleichrichter 29 auf die Ausgangskapazität 28 übertragen. Diese Übertragung der Ladung findet "portionsweise" statt, wie man an dem stufenförmigen Anstieg der Ausgangsspannung Vₒᵤₜ erkennen kann, so dass dann an den entsprechenden Stellen bzw. zu den entsprechenden Stellen die Ausgangsspannung schrittweise erhöht wird.

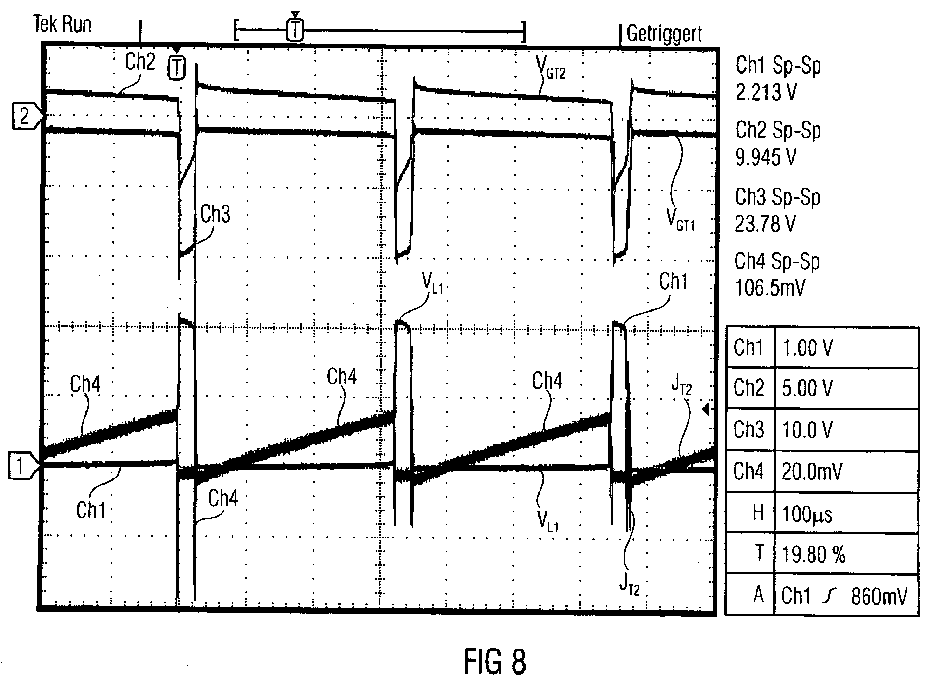

Fig. 8 zeigt weitere Messungen von Strom und Spannung an verschiedenen Punkten der Spannungswandlerschaltung aus Fig. 5 während der Betriebsphase. Die zeitliche Auflösung für diese Messungen beträgt 100µs pro Zeitintervall. Die Spannungswandlerschaltung arbeitet nun in der Betriebsphase periodisch mit einer, wie oben dargelegt ist, einstellbaren Arbeitsfrequenz. Die Spannung an dem Steueranschluss des ersten Transistors T₁ ist in Kurve V_{GT1} dargestellt und die Spannung an dem Steueranschluss des zweiten Transistors T₂ ist in der Kurve V_{GT2} dargestellt. Der entsprechende Strom durch den zweiten Transistor T₂ und die entsprechende Spannung an der ersten Spule 12 weisen die gleiche Periodizität auf. Wie den beiden Kurven V_{L1} und I_{T2} zu entnehmen ist, steigt die Spannung an der ersten Spule L₁ dementsprechend zu den Zeiten an, in denen der Stromfluss durch den zweiten Transistor unterbrochen ist. Durch den Anstieg der Spannung in der ersten Spule kann nun die Ladung über den in Serie gekoppelten schaltbaren Gleichrichter 29 auf die Ausgangskapazität übertragen werden. Das heißt, die Schwellspannung der Diode D₃ des schaltbaren Gleichrichters 29 wird überschritten und die Diode schaltet durch. Um die Effizienz zu optimieren, kann nun, wie in Ausführungsbeispielen gezeigt wurde, parallel zur Diode D₃ ein Transistor geschaltet sein, der die Stromführung übernimmt, wenn die Diode normalerweise leiten würde. Da der Transistor einen geringeren Einwiderstand ("On"-Widerstand), also einen geringen Widerstand im eingeschalteten Zustand, aufweist als die Diode, kann durch diese Maßnahme die Effizienz der Spannungswandlerschaltung erhöht werden.

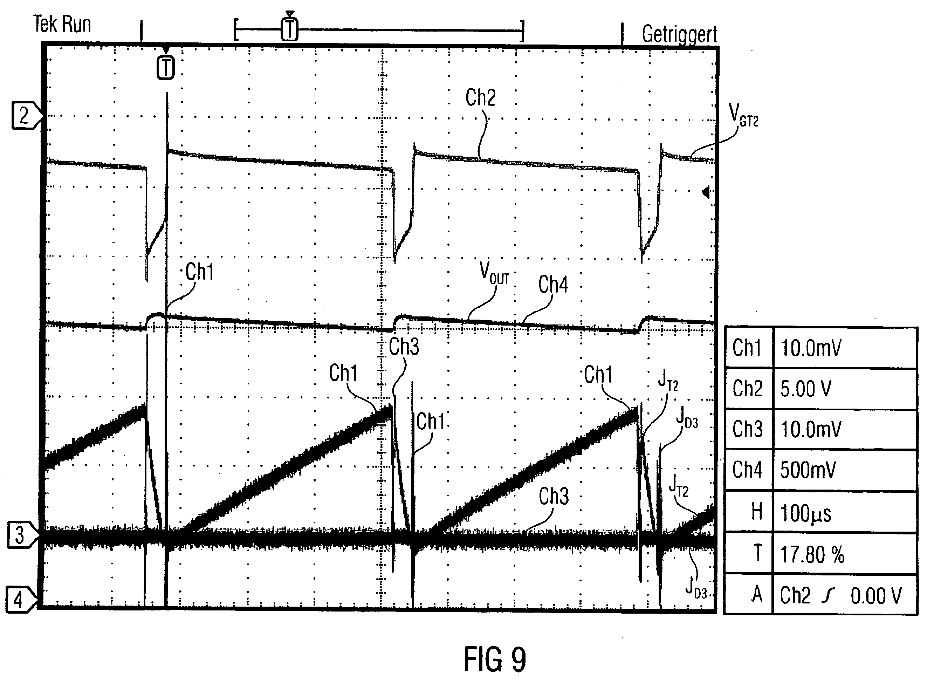

Fig. 9 zeigt weitere Strom- bzw. Spannungsmesskurven an verschiedenen Messpunkten des Spannungswandlers in Fig. 5. Die Strom-/Spannungskurven wurden wiederum während der getakteten Betriebsphase, also nach der Startphase, gemessen. Die Ausgangsspannung Vₒᵤₜ hat nun einen annähernd konstanten Wert. Der Ausgangskapazität 28 wird zu den Zeitpunkten, an denen der zweite Transistor T₂ ausgeschaltet ist, also die Gate-Spannung V_{GT2} vermindert ist, Ladung von der ersten Spule 12 zugeführt, so dass die Ausgangsspannung wieder leicht ansteigt. Dies kann man daran erkennen, dass in der Phase, in der der Strom I_{T2} durch den Transistor abnimmt, der Strom I_{D3} über die Diode D₃ auf die Ausgangskapazität 28 fließt.

Aus den Ausführungsbeispielen und den Messkurven in den Diagrammen 4 bis 7 wird deutlich, dass sich die Startphase und die Betriebsphase zeitlich überlappen können. D.h. in einem Übergangszeitraum können sowohl der erste Schalter 13, als auch der zweite Schalter 17 aktiv sein.

Bei einigen Ausführungsbeispielen können nach der Startphase, sowohl der Steueranschluss des ersten Transistors, als auch der Steueranschluss des zweiten Transistors angesteuert werden, um die Transistoren einzuschalten. Allerdings übernimmt beispielsweise der zweite Transistor in diesem Fall aufgrund seines geringeren Ein-Widerstandes einen Hauptstromfluss. Beispielsweise kann ein Stromfluss durch den zweiten Transistor mindestens fünfmal so groß sein, wie der durch den ersten Transistor.

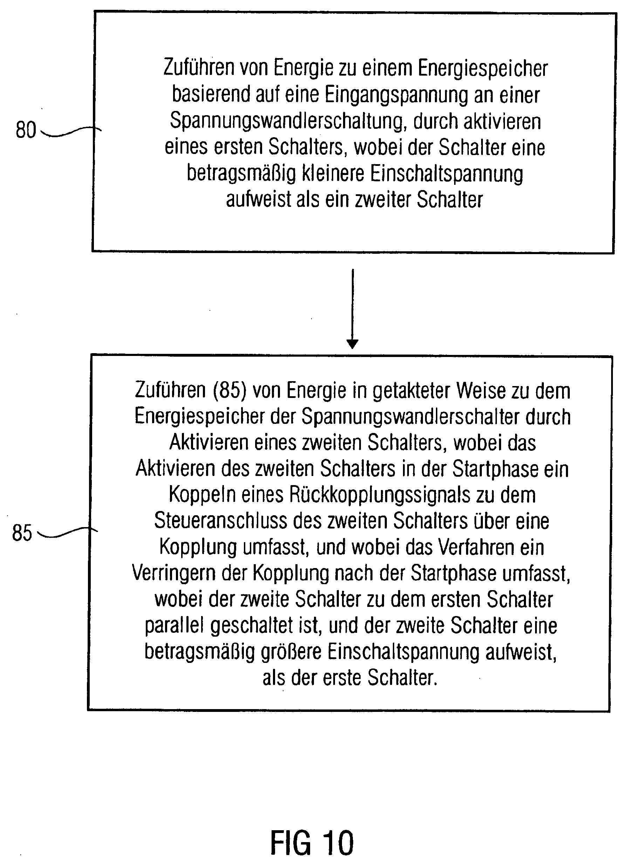

Die vorliegende Erfindung schafft außerdem ein Verfahren zum getakteten Zuführen von Energie zu einem Energiespeicher basierend auf einer Eingangsspannung, die an einem Eingang einer Spannungswandlerschaltung anliegt. Das Verfahren weist, wie in dem Blockschaltbild in Fig. 10 schematisch dargestellt ist, einen Schritt des Zuführens 80 von Energie zu dem Energiespeicher der Spannungswandlerschaltung in einer Startphase, durch Aktivieren eines ersten Schalters, wobei der erste Schalter eine betragsmäßig kleinere Einschaltschwellspannung aufweist, als der zweite Schalter. Das Verfahren weist ferner ein Zuführen 85 von Energie in getakteter Weise zu dem Energiespeicher der Spannungswandlerschaltung nach der Startphase, durch Aktivieren des zweiten Schalters auf. Der zweite Schalter, der zu dem ersten Schalter parallel geschaltet ist, weist eine betragsmäßig größere Einschaltspannung auf, als der erste Schalter.

In einem weiteren Ausführungsbeispiel des Verfahrens zum getakteten Zuführen von Energie zu einem Energiespeicher kann das Zuführen 85 von Energie in getakteter Weise zu dem Energiespeicher der Spannungswandlerschaltung durch Aktivieren eines zweiten Schalters erfolgen, wobei der zweite Schalter zu dem ersten Schalter parallel geschaltet sein kann, und der zweite Schalter eine betragsmäßig größere Einschaltspannung aufweisen kann, als der erste Schalter. Das Aktivieren des zweiten Schalters kann in der Startphase ein Koppeln eines Rückkopplungssignals zu dem Steueranschluss des zweiten Schalters über eine Kopplung aufweisen. Nach der Startphase kann das Verfahren ein Verringern der Kopplung umfassen.

Das getaktete Zuführen 85 der Energie kann beispielsweise so durchgeführt werden, dass der Spannungswandler bzw. die Spannungswandlerschaltung zu selbst schwingenden Oszillationen angeregt wird, so dass der erste und/oder der zweite Schalter periodisch aus- und eingeschaltet wird und so dass dadurch dem Energiespeicher Energie zugeführt wird. Bei dem Energiespeicher kann es sich beispielsweise um eine Induktionsspule handeln. So kann durch Schließen des ersten oder zweiten Schalters ein zeitlich veränderlicher Stromfluss in der Induktionsspule hervorgerufen werden, der beispielsweise zyklisch unterbrochen wird und der eine Zwischenspeicherung einer entsprechenden magnetischen Energie in Form eines Magnetfeldes in der Induktionsspule bewirkt. D. h. in Ausführungsbeispielen der vorliegenden Erfindung kann der Energiespeicher auch als Zwischenspeicher betrachtet werden.

Gemäß einem weiteren Ausführungsbeispiel der vorliegenden Erfindung kann das getaktete Zuführen 85 von Energie zu den Energiespeichern auch ein Übertragen von Ladungen in den den getakteten Phasen entgegengesetzt getakteten Phasen, auf einen zweiten Energiespeicher, beispielsweise auf den Ausgangskondensator 28 des Spannungswandlers, aufweisen. Beispielsweise kann das Übertragen von Ladungen zeitlich versetzt zu dem getakteten Zuführen erfolgen, beispielsweise derart, dass sich das Übertragen von Ladungen und das getaktete Zuführen abwechselnd bzw. zeitlich nichtüberlappend erfolgen. Das getaktete Zuführen von Energie zu dem Energiespeicher bzw. von Energie auf den Ausgangskondensator kann gemäß einem weiteren Ausführungsbeispiel so durchgeführt werden, dass die Frequenz für diesen getakteten Vorgang durch eine Last an dem Ausgangskondensator einstellbar ist.

In einem anderen Ausführungsbeispiel des Verfahrens zum getakteten Zuführen von Energie zu einem Energiespeicher kann das Zuführen von Energie 80 und 85 zu dem Energiespeicher so durchgeführt werden, dass durch eine Änderung der Energie in dem Energiespeicher oder durch eine Menge an Energie in dem Energiespeicher eine Rückkopplung zwischen dem ersten und dem zweiten Schalter und dem Energiespeicher durchgeführt wird, so dass sich eine selbstschwingende Oszillation in der Spannungswandlerschaltung hervorrufen lässt.

Das Verfahren zum getakteten Zuführen von Energie kann so durchgeführt werden, dass das Zuführen 80 von Energie auf den Energiespeicher der Spannungswandlerschaltung bei einer Eingangsspannung durchführbar ist, die betragsmäßig kleiner als 300mV oder sogar kleiner als 100mV ist. In Ausführungsbeispielen wird das Verfahren so durchgeführt, dass in einer Startphase das Zuführen von Energie zu dem Energiespeicher mit dem ersten Transistor, welcher eine geringere Einschaltspannung aufweist als der zweite Transistor, durchgeführt wird, und dass nach der Startphase das Zuführen von Energie zu dem Energiespeicher mit einem zweiten Transistor oder zumindest im Wesentlichen durch den zweiten Transistor durchgeführt wird, der einen geringeren "Ein"-Widerstand aufweist, als der erste Transistor.

Bei einigen Ausführungsbeispielen kann also der erste Transistor beispielsweise als selbstleitender JFET ausgebildet sein, bei dem das Zuführen von Energie auf den Energiespeicher bereits ab einer betragsmäßigen Eingangsspannung größer als 0V bzw. bei einer Gate-Source-Spannung von 0V starten kann.

In einem Ausführungsbeispiel zu einem weiteren Verfahren zum getakteten Zuführen von Energie zu einem Energiespeicher 12, basierend auf einer Eingangsspannung VDD, die an einem Eingang 14 einer Spannungswandlerschaltung 10 anliegt, wird ein Zuführen 110 von Energie in einer schaltbaren Weise zu dem Energiespeicher der Spannungswandlerschaltung in Abhängigkeit von einem an einem Steueranschluss 100a einer Schalteranordnung anliegenden Steuersignal durchgeführt. In einem anderen Schritt des Verfahrens wird ein Rückkopplungssignal mit Hilfe einer Rückkopplungsschaltung, in Abhängigkeit von einer Änderung der in dem Energiespeicher gespeicherten Energie oder in Abhängigkeit von einer Menge der in dem Energiespeicher gespeicherten Energie bereitgestellt 120. Die entsprechende Rückkopplungsschaltung weist zum Bereitstellen 120 des Rückkopplungssignal ein schaltbares Koppelelement auf, das ausgelegt ist, um das Rückkopplungssignal zu dem Steueranschluss 100a der Schalteranordnung 15 zu koppeln, und wobei das schaltbare Koppelelement ausgelegt ist, um in einer Startphase eine stärkere Kopplungswirkung bereitzustellen als nach der Startphase.

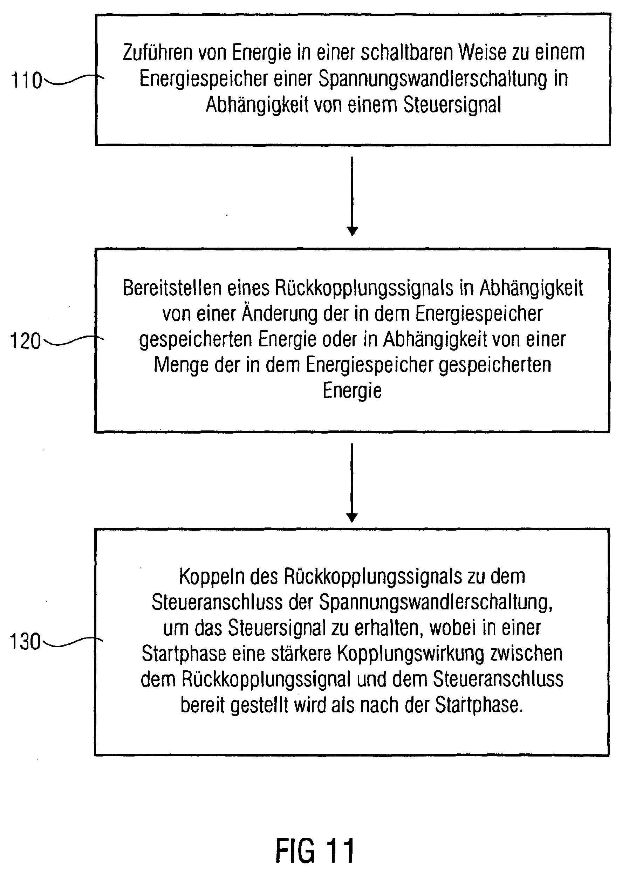

Fig. 11 zeigt ein Flussdiagramm eines weiteren Ausführungsbeispiels zu dem weiteren Verfahren zum getakteten Zuführen von Energie zu einem Energiespeicher, basierend auf einer Eingangsspannung VDD, die an einem Eingang 14 einer Spannungswandlerschaltung 10 anliegt. Das weitere Verfahren weist einen Schritt des Zuführens 110 von Energie in einer schaltbaren Weise zu dem Energiespeicher der Spannungswandlerschaltung in Abhängigkeit von einem Steuersignal auf. Ferner weist das Verfahren ein Bereitstellen 120 eines Rückkopplungssignals in Abhängigkeit von einer Änderung der in dem Energiespeicher gespeicherten Energie oder in Abhängigkeit von einer Menge der in dem Energiespeicher gespeicherten Energie auf und ein Koppeln 130 des Rückkopplungssignals zu dem Steueranschluss der Schalteranordnung, um das Steuersignal zu erhalten, wobei in einer Startphase eine stärkere Kopplungswirkung zwischen dem Rückkopplungssignal und dem Steueranschluss bereitgestellt wird als nach der Startphase.

Das Verfahren gemäß der Fig. 10 und 11 und gemäß der beschriebenen Ausführungsbeispielen zu den Verfahren kann im übrigem um all diejenigen Funktionalitäten und Merkmale ergänzt werden, die hierin, auch in Bezug auf Ausführungsbeispiele der Vorrichtung, beschrieben sind.

Gemäß Ausführungsbeispielen kann der vorgestellte Spannungswandler mit gekoppelten Spulen arbeiten und beispielsweise bereits bei einer Eingangsspannung von 60mV starten.

Dabei kann der Spannungswandler bei kleinen Abmessungen bereits mehr als 50 Prozent Wirkungsgrad bei einer Ausgangsspannung von 2V und einer Ausgangsleistung von 1mW aufweisen. Durch den hier vorgestellten Spannungswandler bzw. durch die hier vorgestellte Spannungswandlerschaltung kann eine hohe Effizienz der Spannungswandlung bei sehr niedrigen Eingangsspannungen (unter 300 mV) erreicht werden. Wie in Ausführungsbeispielen dargestellt ist, kann die Schaltung aus Einzelbauteilen aufgebaut werden, d. h. es ist nicht nötig, eine integrierte Schaltung zu verwenden. Trotzdem kann der Bauteilaufwand relativ gering sein. Wie in Ausführungsbeispielen gezeigt ist, kann die Anforderung an den zu verwendenden Übertrager, also die gekoppelten Spulen, hoch sein, aber bei entsprechender Wahl der Bauteile und der Kernmaterialien sind insgesamt geringe Abmessungen der Gesamtanordnung erreichbar. Es ist jedoch natürlich auch denkbar, dass die Spannungswandlerschaltung bzw. der Spannungswandler ganz oder zumindest teilweise in Form einer integrierten Schaltung realisiert wird.

Gemäß Ausführungsbeispielen kann die Spannungswandlerschaltung als ein synchroner Step-up-Konverter, also ein Aufwärtswandler mit einer Rückkopplungsschleife, welche erlaubt, die Ausgangsspannung während der Betriebsphase zu regulieren, oder als Hochsetzsteller, ausgebildet sein.

Es ist jedoch auch denkbar, dass eine entsprechend modifizierte Spannungswandlerschaltung als ein Tiefsetzsteller ausgebildet ist, bei dem die Ausgangsspannung kleiner ist, als die Eingangsspannung.

Ferner sollte darauf hingewiesen werden, dass in Ausführungsbeispielen der vorliegenden Erfindung die Rückkopplungsschaltung ein schaltbares Kopplungselement (24) aufweisen kann, welches als schaltbares kapazitives Element ausgebildet sein kann.

Wie in Ausführungsbeispielen gezeigt ist, kann nach der Startphase ein zweiter MOSFET-Transistor T₂, welcher parallel zu einem JFET-Transistor T₁ geschaltet ist, als Schaltelement zum getakteten Wandeln der Spannung dienen. Die parallele Verbindung beider Transistoren erlaubt es zum einen, für den Startvorgang des Spannungswandlers eine geringe Eingangsspannung zur verwenden, da der erste Transistor selbstleitend sein kann und eine "Zero-threshold-gatevoltage" (Null-Schwellen-Gate-Spannung), also eine 0-Volt-Schwellspannung, aufweisen kann und zum anderen, während der Betriebsphase eine hohe Effizienz aufzuweisen, da der zweite MOSFET 17 einen geringen Ein-Widerstand ("On"-Widerstnd) im eingeschalteten Zustand aufweist.

Es ist zu beachten, dass die hierin beschriebene Regelschaltung 40 für die Ansteuerung des schaltbaren Gleichrichters 29, der eine Diode 38 und einen parallel zu der Diode angeordneten Transistor 39 umfassen kann, der über die weitere Regelschaltung 40 beschaltbar ist bzw. angesteuert wird, auch für die Ausführungsbeispiele, die im Zusammenhang mit den Fig. 1,2 und 11 beschrieben wurden, verwendet werden kann. Dasselbe gilt für die Regelschleife 27, die ausgebildet ist, um die Frequenz oder ein Tastverhältnis des Zuführens von Energie zu dem Energiespeicher nach der Startphase der Spannungswandlerschaltung zu steuern. Zu diesem Zweck kann die Regelschleife 27 in den Ausführungsbeispielen, die im Zusammenhang mit den Fig. 1 und 2 beschrieben sind, beispielsweise mit dem Steueranschluss 100a der Schalteranordnung 15, bzw. mit dem Steueranschluss des Schalters 100 gekoppelt sein.

Eine Spannungswandlerschaltung 10 zum getakteten Zuführen von Energie zu einem Energiespeicher 12, basierend auf einer Eingangsspannung VDD, die an einem Eingang 14 der Spannungswandlerschaltung anliegt, könnte folgende Merkmale aufweisen: einen Energiespeicher 12; eine Schalteranordnung 15, wobei die Schalteranordnung einen ersten Schalter 13 und einen zweiten Schalter 17 aufweist, die zueinander parallel geschaltet sind, wobei die Schalteranordnung mit dem Energiespeicher gekoppelt ist, wobei der erste Schalter eine betragsmäßig kleinere Einschaltspannung aufweist, als der zweite Schalter, wobei ein Steueranschluss 13a des ersten Schalters 13 so beschaltet ist, dass der erste Schalter in einer Startphase der Spannungswandlerschaltung aktiv ist, um dem Energiespeicher Energie zuzuführen, und wobei ein Steueranschluss 17a des zweiten Schalters so beschaltet ist, dass der zweite Schalter 17 nach der Startphase aktiv ist, um dem Energiespeicher 12 in getakteter Weise Energie zuzuführen; und einer Rückkopplungsschaltung 20, die ausgebildet ist, um in Abhängigkeit von einer Änderung der in dem Energiespeicher 12 gespeicherten Energie oder in Abhängigkeit von einer Menge der in dem Energiespeicher gespeicherten Energie ein Rückkopplungssignal bereitzustellen, wobei die Rückkopplungsschaltung 20 ein schaltbares Kopplungselement 24 aufweist, das ausgelegt ist, um das Rückkopplungssignal zu dem Steueranschluss 17a des zweiten Schalters zu koppeln, wobei das schaltbare Kopplungselement 24 ausgelegt ist, um in einer Startphase eine stärkere Kopplungswirkung bereitzustellen als nach der Startphase.

Bei einem Ausführungsbeispiel der obigen Spannungswandlerschaltung ist der Energiespeicher eine Spule 12, die induktiv mit einem induktiven Element 22 einer Rückkopplungsschaltung 20 gekoppelt ist, so dass in Abhängigkeit einer Änderung der in der Spule gespeicherten Energie eine selbstschwingende Oszillation in der Spannungswandlerschaltung anregbar ist.

Bei einem weiteren Ausführungsbeispiel der obigen Spannungswandlerschaltung hängt die Frequenz der selbstschwingenden Oszillation zum getakteten Zuführen von Energie zu dem Energiespeicher 12 von einer Widerstands-Kondensator-Zeitkonstante ab.

Bei einem weiteren Ausführungsbeispiel der obigen Spannungswandlerschaltung ist der Energiespeicher mit der Rückkopplungsschaltung 20 so gekoppelt, dass in Abhängigkeit von einer Änderung der in dem Energiespeicher gespeicherten Energie oder in Abhängigkeit von einer Menge der in dem Energiespeicher gespeicherten Energie ein Rückkopplungssignal entsteht, das die Spannungswandlerschaltung zu selbstschwingenden Oszillationen anregt.

Bei wiederum einem weiteren Ausführungsbeispiel der Spannungswandlerschaltung ist der Steueranschluss 17a des zweiten Schalters 17 an eine Regelschleife 27 gekoppelt, die ausgebildet ist, um die Frequenz des getakteten Zuführens von Energie zu dem Energiespeicher 12 zu beeinflussen.

Bei einem weiteren Ausführungsbeispiel der obigen Spannungswandlerschaltung ist der Energiespeicher über einen geschalteten Gleichrichter 29 mit einer Ausgangskapazität 28 gekoppelt, die ausgebildet ist, um in Abhängigkeit einer von dem Energiespeicher übertragenen Ladung eine Ausgangsspannung zur Verfügung zu stellen, die höher ist als eine Eingangsspannung, die an einem Eingang der Spannungswandlerschaltung anliegt.

Bei einem weiteren Ausführungsbeispiel der obigen Spannungswandlerschaltung ist der Steueranschluss 17a des zweiten Schalters 17 so beschaltet, dass der zweite Schalter nach der Startphase aktiv ist, um dem Energiespeicher Energie in getakteter Weise zuzuführen; und wobei die Spannungswandlerschaltung ausgelegt ist, um Ladung von dem Energiespeicher 12 auf die Ausgangskapazität 28 zu übertragen, um eine Ausgangsspannung an der Ausgangskapazität zur Verfügung zu stellen, wenn der zweite Schalter geöffnet ist.

Bei einem weiteren Ausführungsbeispiel der obigen Spannungswandlerschaltung 10 ist der Steueranschluss 17a des zweiten Schalters an eine Regelschleife 27 gekoppelt, die ausgebildet ist, um in Abhängigkeit einer Last an der Ausgangskapazität 28, eine Frequenz für das getaktete Zuführen von Energie auf den Energiespeicher und das Übertragen von Ladungen aus dem Energiespeicher auf die Ausgangskapazität zu steuern.

Bei einem weiteren Ausführungsbeispiel der obigen Spannungswandlerschaltung ist die Regelschleife 27 ausgelegt, um die Frequenz zu erniedrigen, je höher die Last an der Ausgangskapazität ist.

Bei einem weiteren Ausführungsbeispiel weist die obige Spannungswandlerschaltung ferner eine Schutzschaltung auf, die mit dem Steueranschluss 17a des zweiten Schalters 17 gekoppelt ist, und die ausgebildet ist, um den zweiten Schalter gegen eine Überspannung zu schützen.

Bei einem weiteren Ausführungsbeispiel der obigen Spannungswandlerschaltung weist die Schutzschaltung zwei entgegengesetzt gekoppelte Zenerdioden 36,37 auf.

Bei wiederum einem weiteren Ausführungsbeispiel der obigen Spannungswandlerschaltung ist der Steueranschluss des zweiten Schalters an eine Regelschleife 27 gekoppelt; wobei die Regelschleife ausgelegt ist, um eine Frequenz des Zuführens von Energie zu dem Energiespeicher und des Übertragens einer Ladung von dem Energiespeicher 12 auf eine mit dem Energiespeicher gekoppelte Ausgangskapazität 28, an der eine Ausgangsspannung zur Verfügung steht, zu beeinflussen; wobei die Regelschleife 27 eine positive Spannungsbegrenzung 27a oder eine negative 27b Spannungsbegrenzung aufweist; und wobei die Regelschleife ausgelegt ist, um einen Spannungsbegrenzungswert der Spannungsbegrenzung oder ein Ansprechverhalten der Spannungsbegrenzung in Abhängigkeit einer Last an der Ausgangskapazität 28 zu verändern, um so ein Verhältnis zwischen einer Einschaltzeit des zweiten Schalters und einer Ausschaltzeit des zweiten Schalters zu verändern.

Bei einem weiteren Ausführungsbeispiel der obigen Spannungswandlerschaltung weist der erste Schalter einen selbstleitenden Transistor auf und weist der zweite Schalter einen selbstsperrenden Transistor auf

Bei einem weiteren Ausführungsbeispiel der obigen Spannungswandlerschaltung weist der zweite Schalter einen niedrigeren Ein-Widerstand auf als der erste Schalter.

Bei einem weiteren Ausführungsbeispiel der obigen Spannungswandlerschaltung ist die Rückkopplungsschaltung ausgelegt, um ein Anschwingen bereits bei einer Eingangsspannung von weniger als 100mV zu ermöglichen.

Bei einem weiteren Ausführungsbeispiel der obigen Spannungswandlerschaltung ist der erste Schalter ein Sperrschicht-Feldeffekt-Transistor JFET und der zweite Schalter ein Metall-Oxid-Halbleiter-Feldeffekt-Transistor MOSFET.

Ein Spannungswandler zum getakteten Wandeln einer Eingangsspannung VDD, die an einem Eingang 14 des Spannungswandlers anliegt, in eine Ausgangsspannung, die an einem Ausgang des Spannungswandlers zur Verfügung steht, könnte folgende Merkmale aufweisen: eine erste Spule 12, wobei ein Anschluss der Spule mit dem Eingang 14 des Spannungswandlers gekoppelt ist; ein ansteuerbares Gleichrichtungselement 29, das in Reihe mit der ersten Spule 12 geschaltet ist; einen Ausgangskondensator 28, der mit dem steuerbaren Gleichrichtungselement 29 verschaltet ist, und der ausgelegt ist um eine Ladung zu speichern, so dass an dem Ausgangskondensator 28 eine Ausgangsspannung Vout zur Verfügung steht; und eine Schalteranordnung 15; eine Rückkopplungsschaltung 20, die ausgebildet ist, um in Abhängigkeit von einer Änderung der in der ersten Spule 12 gespeicherten Energie oder in Abhängigkeit von einer Menge der in der ersten Spule gespeicherten Energie ein Rückkopplungssignal bereitzustellen, wobei die Schalteranordnung 15 ausgelegt ist, um die erste Spule mit einem Referenzpotential VSS zu koppeln, um der ersten Spule eine Energie zuzuführen; wobei die Schalteranordnung einen ersten Transistor 13 und einen zweiten Transistor 17 aufweist, die zueinander parallel geschaltet sind; wobei der erste Transistor 13 eine betragsmäßig kleinere Schwellspannung aufweist, als der zweite Transistor; wobei ein Steueranschluss 13a des ersten Transistors so beschaltet ist, dass der erste Transistor in einer Startphase des Spannungswandlers aktiv ist, um eine Kopplung der ersten Spule 12 mit dem Referenzpotential VSS zu ermöglichen, um einen Stromfluss durch die erste Spule aufzubauen; wobei die Rückkopplungsschaltung 20 ein schaltbares kapazitives Element 24 aufweist, das ausgelegt ist, um das Rückkopplungssignal zu dem Steueranschluss 17a eines zweiten Schalters 17 zu koppeln, wobei das schaltbare kapazitive Element 24 ausgelegt ist, um in einer Startphase eine stärkere Kopplungswirkung bereitzustellen als nach der Startphase, wobei ein Steueranschluss 17a des zweiten Transistors 17 so beschaltet ist, dass der zweite Transistor 17 nach der Startphase eine getaktete Kopplung der ersten Spule 12 mit dem Referenzpotential VSS ermöglicht; und wobei das angesteuerte Gleichrichterelement ausgelegt ist, um Ladungen von der ersten Spule 12 auf den Ausgangskondensator 28 zu übertragen, wenn die Schalteranordnung ausgeschaltet ist.

Bei einem Ausführungsbeispiel des obigen Spannungswandlers ist der erste Transistor als Sperrschicht-Feldeffekt-Transistor JFET 13 ausgebildet und der zweite Transistor als Metall-Oxid-Halbleiter-Transistor MOSFET 17 ausgebildet; wobei der Spannungswandler ausgelegt ist, um in der Startphase die erste Spule 12 über den JFET 13 mit dem Referenzpotential VSS zu koppeln, so dass zu Beginn der Startphase ein Stromfluss durch den JFET mindestens fünfmal so groß ist wie ein Stromfluss durch den MOSFET, und um nach der Startphase ein getaktetes Wandeln einer Eingangsspannung in eine Ausgangsspannung unter Verwendung des MOSFET 17 durchzuführen, so dass nach der Startphase ein Stromfluss durch den MOSFET mindestens zehnmal so groß ist wie ein Stromfluss durch den JFET.

Bei einem weiteren Ausführungsbeispiel des obigen Spannungswandlers ist ein Ein-Widerstand des JFET mindestens fünfmal so groß wie ein Ein-Widerstand des MOSFET.

Bei einem Ausführungsbeispiel ist der obige Spannungswandler so ausgebildet, dass aufgrund einer induktiven Kopplung der ersten Spule mit der zweiten und dritten Spule die Rückkopplungsschaltung des Spannungswandlers zu selbstschwingenden Oszillationen anregbar ist.

Bei einem weiteren Ausführungsbeispiel ist der obige Spannungswandlers ist so ausgebildet, dass die selbstschwingende Oszillation bereits bei einer Eingangsspannung einsetzt, die betragsmäßig kleiner als eine Einschaltspannung des zweiten Transistors ist; wobei der Spannungswandler ausgebildet ist, um in der Startphase ein Rückkopplungssignal zu dem Steueranschluss des zweiten Transistors zu koppeln, so dass eine Spannung an dem Steueranschluss des zweiten Transistors die Einschaltspannung des zweiten Transistors erreicht, wobei die Eingangsspannung kleiner ist als die Schwellspannung des zweiten Transistors.

Bei einem Ausführungsbeispiel des obigen Spannungswandlers weist das ansteuerbare Gleichrichtungselement eine Diode 38 mit einem parallel dazu geschalteten ansteuerbaren Transistor 39 auf.

Bei einem weiteren Ausführungsbeispiel des obigen Spannungswandlers ist der Steueranschluss des zweiten Transistors an eine Regelschleife 27 gekoppelt, die ausgelegt ist, um in Abhängigkeit von einer Last an dem Ausgangskondensator 28 eine Frequenz für das getaktete Koppeln und Übertragen von Ladung von der ersten Spule 12 auf den Ausgangskondensator 28 zu steuern, wobei der Steueranschluss 17a des zweiten Transistors mit einem ersten Zweig 27a für eine negative Spannungsbegrenzung beschaltet ist, wobei der erste Zweig 27a eine Diode 30 und ein resistives Element 31 umfasst, die zwischen dem Steueranschluss des zweiten Transistors und das Referenzpotential VSS geschaltet sind, und wobei der Steueranschluss mit einem zweiten Zweig für eine positive Spannungsbegrenzung beschaltet ist, wobei der zweite Zweig eine Diode und ein einstellbares resistives Element umfasst, die zwischen den Steueranschluss des zweiten Transistors und das Referenzpotential geschaltet sind; wobei das einstellbare resistive Element einen Regel-Transistor 33 umfasst, dessen Laststrecke einen einstellbaren Widerstand aufweist, wobei der Regeltransistor so beschaltet ist, dass ein Widerstand der Laststrecke des Regeltransistors von der Ausgangsspannung des Spannungswandlers abhängig ist.

Bei einem weiteren Ausführungsbeispiel ist obige Spannungswandlers aus diskreten elektrischen Bauteilen aufgebaut.

Bei einem Ausführungsbeispiel weist obiger Spannungswandler eine Rückkopplungsschaltung 20 zur Erzeugung von Ansteuersignalen für den ersten Schalter und den zweiten Schalter auf, wobei die Rückkopplungsschaltung 20 über eine zweite L₂ und eine dritte Spule L₃ mit der ersten Spule 12 induktiv gekoppelt ist, und wobei das Windungsverhältnis der ersten Spule zu dem der zweiten und dritten Spule zwischen 1:4 und 1:25 liegt.

Bei einem Ausführungsbeispiel weist der obige Spannungswandler eine Rückkopplungsschaltung auf, wobei die Rückkopplungsschaltung über eine zweite und eine dritte Spule mit der ersten Spule induktiv gekoppelt ist, und wobei die erste, die zweite und die dritte Spule ein Spulenkernmaterial mit einer absoluten magnetischen Permeabilität µ höher als 6,28 x 10⁻⁵ H/m aufweisen.

Bei wiederum einem weiteren Ausführungsbeispiel weist der obige Spannungswandler ferner eine Spannungsschutzschaltung auf, die zwischen dem Steueranschluss 17a des zweiten Transistors und dem Referenzpotential VSS geschaltet ist, wobei die Spannungsschutzschaltung zwei entgegen gesetzt gekoppelte Zenerdioden aufweist.

Ein Verfahren zum getakteten Zuführen von Energie zu einem Energiespeicher 12, basierend auf einer Eingangsspannung VDD, die an einem Eingang 14 einer Spannungswandlerschaltung 10 anliegt, könnte folgende Schritte aufweisen: Zuführen 80 von Energie zu dem Energiespeicher der Spannungswandlerschaltung in einer Startphase durch Aktivieren eines ersten Schalters; und Zuführen 85 von Energie in getakteter Weise zu dem Energiespeicher der Spannungswandlerschaltung durch Aktivieren eines zweiten Schalters, wobei das Aktivieren des zweiten Schalters in der Startphase ein Koppeln eines Rückkopplungssignals zu dem Steueranschluss des zweiten Schalters über eine Kopplung umfasst, und wobei das Verfahren ein Verringern der Kopplung nach der Startphase umfasst, wobei der zweite Schalter zu dem ersten Schalter parallel geschaltet ist, und der zweite Schalter eine betragsmäßig größere Einschaltspannung aufweist, als der erste Schalter.

Bei einem Ausführungsbeispiel des obigen Verfahrens umfasst das Zuführen von Energie in getakteter Weise zu dem Energiespeicher ein Anregen einer selbstschwingenden Oszillation der Spannungswandlerschaltung.

Bei einem weiteren Ausführungsbeispiel des obigen Verfahrens umfasst das Zuführen 80 von Energie auf den Energiespeicher der Spannungswandlerschaltung in der Startphase und das Zuführen 85 von Energie in getakteter Weise nach der Startphase ein Koppeln von Rückkopplungssignalen, die auf einer Änderung der Energie in dem Energiespeicher 12 basieren, zu Steueranschlüssen des ersten Schalters und des zweiten Schalters.

Bei einem Ausführungsbeispiel des obigen Verfahrens umfasst das Zuführen 85 von Energie in getakteter Weise ein lastabhängiges Steuern eines Steueranschlusses des zweiten Schalters mit einer Regelschleife 27, wobei eine Arbeitsfrequenz der Spannungswandlerschaltung umso geringer ist, je höher eine Last ist, die mit einem Ausgang der Spannungswandlerschaltung gekoppelt ist.

Bei einem Ausführungsbeispiel des obigen Verfahrens werden das Zuführen 80 von Energie zu dem Energiespeicher in einer Startphase und das Zuführen 85 von Energie in getakteter Weise nach der Startphase bei einer Eingangsspannung VDD durchgeführt, die kleiner als 300 mV, oder kleiner als 250 mV, ist.

Bei einem weiteren Ausführungsbeispiel des obigen Verfahrens erfolgt das Zuführen 80 von Energie zu dem Energiespeicher nach der Startphase derart, dass ein Stromfluss durch den zweiten Schalter mindestens zehnmal so groß ist wie ein Stromfluss durch den ersten Schalter.

Eine Spannungswandlerschaltung 10 zum getakteten Zuführen von Energie zu einem Energiespeicher 12, basierend auf einer Eingangsspannung VDD, die an einem Eingang 14 der Spannungswandlerschaltung anliegt, könnte folgende Merkmale aufweisen: einen Energiespeicher 12; eine Schalteranordnung 15 mit einem Steueranschluss 100a, wobei die Schalteranordnung mit dem Energiespeicher gekoppelt ist, um dem Energiespeicher in Abhängigkeit von einem an dem Steueranschluss anliegenden Steuersignal in schaltbarer Weise Energie zuzuführen; eine Rückkopplungsschaltung 20, die ausgebildet ist, um in Abhängigkeit von einer Änderung der in dem Energiespeicher 12 gespeicherten Energie oder in Abhängigkeit von einer Menge der in dem Energiespeicher gespeicherten Energie ein Rückkopplungssignal bereitzustellen, wobei die Rückkopplungsschaltung 20 ein schaltbares Kopplungselement 24 aufweist, das ausgelegt ist, um das Rückkopplungssignal zu dem Steueranschluss 100a zu koppeln, und wobei das schaltbare Koppelelement 24 ausgelegt ist, um in einer Startphase der Spannungswandlung eine stärkere Kopplungswirkung bereitzustellen als nach der Startphase.

Bei einem Ausführungsbeispiel der obigen Spannungswandlerschaltung weist die Schalteranordnung 15 einen Schalter 100 auf, der ausgebildet ist, um dem Energiespeicher in Abhängigkeit von einer an dem Steueranschluss 100a der Schalteranordnung 15 anliegenden Steuersignal in schaltbarer Weise Energie zuzuführen.

Bei einem weiteren Ausführungsbeispiel der obigen Spannungswandlerschaltung ist der Energiespeicher eine Spule 12, wobei die Rückkopplungsschaltung ein induktives Element 22 aufweist, das magnetisch mit der Spule gekoppelt ist, so dass durch eine Änderung der in der Spule 12 gespeicherten Energie eine Spannung in dem induktiven Element 22 induziert wird, die als das Rückkopplungssignal dient.

Bei einem Ausführungsbeispiel der obigen Spannungswandlerschaltung weist das schaltbare kapazitive Element 24 einen Starthilfeschalter 24b auf, der so beschaltet ist, dass das schaltbare kapazitive Element 24 in der Startphase eine stärkere Kopplungswirkung bereitstellt, als nach der Startphase.

Bei einem Ausführungsbeispiel der obigen Spannungswandlerschaltung ist der Starthilfeschalter 24b als Sperrschicht-Feld-Effekt-Transistor ausgebildet, dessen Steueranschluss 24b' mit dem Energiespeicher 12 so gekoppelt ist, dass der Starthilfeschalter 24b in der Startphase aktiv ist, um in der Startphase eine stärkere Kopplung zu bewirken als nach der Startphase.

Bei einem weiteren Ausführungsbeispiel der obigen Spannungswandlerschaltung ist der Starthilfeschalter 24b so beschaltet ist, dass eine Kopplungswirkung des schaltbaren kapazitiven Elements 24 auf den Steueranschluss 100a der Schalteranordnung 15 während der Startphase periodisch verändert wird.

Bei einem Ausführungsbeispiel weist die obige Spannungswandlerschaltung ferner ein kapazitives Element 26 auf, welches ausgelegt ist, um in Abhängigkeit von einer Änderung der Energie in dem Energiespeicher oder in Abhängigkeit von Menge der Energie in dem Energiespeicher ein Potential aufzubauen, das auf ein Ausschalten eines Starthilfeschalters 24b, der eine Veränderung der Kopplungswirkung ermöglicht, hinwirkt, so dass der Starthilfeschalter nach der Startphase abgeschaltet wird.

Bei einem Ausführungsbeispiel der obigen Spannungswandlerschaltung ist der Energiespeicher eine Spule 12, die induktiv mit einem induktiven Element 22 der Rückkopplungsschaltung 20 gekoppelt ist, so dass in Abhängigkeit von einer Änderung der in der Spule gespeicherten Energie eine selbstschwingende Oszillation in der Spannungswandlerschaltung anregbar ist.

Bei einem Ausführungsbeispiel der obigen Spannungswandlerschaltung ist der Energiespeicher mit der Rückkopplungsschaltung 20 so gekoppelt, dass in Abhängigkeit von einer Änderung der in dem Energiespeicher gespeicherten Energie oder in Abhängigkeit von einer Menge der in dem Energiespeicher gespeicherten Energie ein Rückkopplungssignal entsteht, das die Spannungswandlerschaltung zu selbstschwingenden Oszillationen anregt.

Bei einem Ausführungsbeispiel der obigen Spannungswandlerschaltung ist der Energiespeicher über einen Gleichrichter 38 mit einer Ausgangskapazität 28 gekoppelt, die ausgebildet ist, um basierend auf einer von dem Energiespeicher übertragenen Ladung eine Ausgangsspannung zur Verfügung zu stellen, die höher ist als eine Eingangsspannung, die an dem Eingang der Spannungswandlerschaltung anliegt.

Bei einem weiteren Ausführungsbeispiel der obigen Spannungswandlerschaltung ist der Starthilfeschalter 24b ein Sperrschicht-Feldeffekt-Transistor JFET und ist ein Schalter 100 der Schalteranordnung 15, der ausgebildet ist, um einen Stromkreis zum Zuführen von Energie zu dem Energiespeicher zu schließen, ein Metall-Oxid-Halbleiter-Feldeffekt-Transistor MOSFET.

Bei einem Ausführungsbeispiel der obigen Spannungswandlerschaltung ist das schaltbare Koppelelement ausgelegt, um in einer Startphase eine stärkere Kopplungswirkung bereitzustellen als nach der Startphase, so dass ein Schalter 100 der Spannungswandlerschaltung ab einer Eingangsspannung VDD, die kleiner ist als eine Einschaltspannung des Schalters 100, aktiv ist, um dem Energiespeicher Energie zuzuführen.

Bei wiederum einem weiteren Ausführungsbeispiel der obigen Spannungswandlerschaltung weist die Schalteranordnung 15 einen ersten Schalter 13 und einen zweiten Schalter 17 auf, die zueinander parallel geschaltet sind, wobei der erste Schalter 13 eine betragsmäßig kleinere Einschaltspannung aufweist, als der zweite Schalter 17, wobei ein Steueranschluss 13a des ersten Schalters 13 so beschaltet ist, dass der erste Schalter in einer Startphase der Spannungswandlerschaltung aktiv ist, um dem Energiespeicher Energie zuzuführen, und wobei ein Steueranschluss 17a des zweiten Schalters 17 so beschaltet ist, dass der zweite Schalter nach der Startphase aktiv ist, um dem Energiespeicher 12 in getakteter Weise Energie zuzuführen; und wobei die Rückkopplungsschaltung 20 ein schaltbares Kopplungselement 24 aufweist, das ausgelegt ist, um das Rückkopplungssignal zu dem Steueranschluss 17a des zweiten Schalters 17 zu koppeln.

## Patentansprüche

1. Eine Spannungswandlerschaltung (10) zum getakteten Zuführen von Energie zu einem Energiespeicher (12), basierend auf einer Eingangsspannung (VDD), die an einem Eingang (14) der Spannungswandlerschaltung anliegt, mit folgenden Merkmalen:
einem Energiespeicher (12);
einer Schalteranordnung (15),
wobei die Schalteranordnung einen ersten Schalter (13) und einen zweiten Schalter (17) aufweist, die zueinander parallel geschaltet sind,
wobei die Schalteranordnung mit dem Energiespeicher gekoppelt ist,
wobei der erste Schalter eine betragsmäßig kleinere Einschaltspannung aufweist, als der zweite Schalter,
wobei ein Steueranschluss (13a) des ersten Schalters (13) so beschaltet ist, dass der erste Schalter in einer Startphase der Spannungswandlerschaltung aktiv ist, um dem Energiespeicher Energie zuzuführen, und
wobei ein Steueranschluss (17a) des zweiten Schalters so beschaltet ist, dass der zweite Schalter (17) nach der Startphase aktiv ist, um dem Energiespeicher (12) in getakteter Weise Energie zuzuführen; und
einer Rückkopplungsschaltung (20), die ausgebildet ist, um in Abhängigkeit von einer Änderung der in dem Energiespeicher (12) gespeicherten Energie oder in Abhängigkeit von einer Menge der in dem Energiespeicher gespeicherten Energie ein Rückkopplungssignal bereitzustellen,
wobei die Rückkopplungsschaltung (20) ein schaltbares Kopplungselement (24) aufweist, das ausgelegt ist, um das Rückkopplungssignal zu dem Steueranschluss (17a) des zweiten Schalters zu koppeln,
wobei das schaltbare Kopplungselement (24) ausgelegt ist, um in einer Startphase eine stärkere Kopplungswirkung bereitzustellen als nach der Startphase.

2. Die Spannungswandlerschaltung (10) gemäß Anspruch 1, bei der der Energiespeicher eine Spule ist;
wobei die Rückkopplungsschaltung ein induktives Element (22) aufweist, das magnetisch mit der Spule gekoppelt ist, so dass durch eine Änderung der in der Spule gespeicherten Energie eine Spannung in dem induktiven Element (22) induziert wird;
wobei die Rückkopplungsschaltung (20) als das schaltbare Kopplungselement (24) ein schaltbares kapazitives Element aufweist, das ausgelegt ist, um die in dem induktiven Element induzierte Spannung zu dem Steueranschluss (17a) des zweiten Schalters zu koppeln.

3. Die Spannungswandlerschaltung (10) gemäß Anspruch 2, bei dem das schaltbare kapazitive Element einen dritten Schalter (24b) aufweist, der so beschaltet ist, dass das schaltbare kapazitive Element in der Startphase eine stärkere Kopplungswirkung bereitstellt, als nach der Startphase.

4. Die Spannungswandlerschaltung (10) gemäß Anspruch 3,
wobei der dritte Schalter (24b) als Sperrschicht-Feld-Effekt-Transistor ausgebildet ist, dessen Steueranschluss (24b') mit dem Energiespeicher (12) so gekoppelt ist, dass der dritte Schalter in der Startphase aktiv ist, um eine stärkere Kopplung zu bewirken, als nach der Startphase.

5. Die Spannungswandlerschaltung (10), gemäß einem der Ansprüche 3 oder 4, wobei der dritte Schalter (24b) so beschaltet ist, dass eine Kopplungswirkung des schaltbaren kapazitiven Elements auf den Steueranschluss (17a) des zweiten Transistors (17) während der Startphase periodisch verändert wird.

6. Die Spannungswandlerschaltung (10), gemäß einem der Ansprüche 3 bis 5, bei dem die Spannungswandlerschaltung (10) ferner ein kapazitives Element (26) aufweist, welches ausgelegt ist, um in Abhängigkeit einer Änderung der Energie in dem Energiespeicher oder der Menge der Energie in dem Energiespeicher ein Potential aufzubauen, das auf ein Ausschalten des dritten Schalters (24b) hinwirkt.

7. Die Spannungswandlerschaltung (10) gemäß einem der Ansprüche 3 bis 6, wobei der dritte Schalter (24b) einen gleichrichtenden Sperrschichtübergang von einem Steueranschluss zu einem Laststreckenanschluss aufweist; und
wobei die Spannungswandlerschaltung ferner ein kapazitives Element (26) aufweist, welches ausgelegt ist, ein Potential, das auf ein Ausschalten des dritten Schalters hinwirkt, unter Ausnutzung einer gleichrichtenden Wirkung des Sperrschichtübergangs des dritten Schalters (24b) aufzubauen, oder welches ausgelegt ist, um das Potential das auf ein Ausschalten des dritten Schalters (24b) wirkt, unter Ausnutzung einer gleichrichtenden Wirkung eines Sperrschichtübergangs des ersten Transistors aufzubauen.

8. Die Spannungswandlerschaltung (10) gemäß einem der vorhergehenden Ansprüche, wobei die Rückkopplungsschaltung ausgelegt ist, um den Steueranschluss des ersten Schalters anzusteuern;
wobei die Rückkopplungsschaltung ausgelegt ist, um in einer Startphase den Steueranschluss (13a) des ersten Schalters (13), der mit dem induktiven Element (22) gekoppelt ist, so anzusteuern, dass der Spule (12) durch den ersten Schalter Energie zugeführt wird; und wobei die Rückkopplungsschaltung ausgelegt ist, um während der Startphase durch eine in dem induktiven Element induzierte Spannung ein Potential aufzubauen, das auf ein Ausschalten des ersten Schalters hinwirkt.

9. Die Spannungswandlerschaltung (10) gemäß einem der vorhergehenden Ansprüche, wobei die Rückkopplungsschaltung ausgelegt ist, um in der Startphase den ersten Schalter so anzusteuern, dass ein Zuführen von Energie zu der Spule durch den ersten Schalter periodisch unterbrochen wird, und
wobei die Rückkopplungsschaltung ausgelegt ist, um während der Startphase das Potential, das auf ein Ausschalten des ersten Schalters hinwirkt, so aufzubauen, dass das periodische Ein- und Ausschalten des ersten Schalters unterbunden wird.

10. Die Spannungswandlerschaltung (10) gemäß einem der vorhergehenden Ansprüche, wobei die Rückkopplungsschaltung ein kapazitives Element (26) aufweist, das mit dem induktiven Element (22) gekoppelt ist,
wobei die Spannungswandlerschaltung ausgelegt ist, um das kapazitive Element (26) auf einen Gleichanteil aufzuladen, so dass nach der Startphase ein Potential an dem kapazitiven Element (26) anliegt, das das Zuführen von Energie zu der Spule (12) mit dem ersten Schalter beendet.

11. Die Spannungswandlerschaltung (10) gemäß einem der vorhergehenden Ansprüche, wobei der erste Schalter einen gleichrichtenden Sperrschichtübergang von einem Steueranschluss zu einem Laststreckenanschluss aufweist; und
wobei die Rückkopplungsschaltung ausgelegt ist, um das Potential, das auf ein Ausschalten des ersten Schalters hinwirkt, unter Ausnutzung einer gleichrichtenden Wirkung des Sperrschichtübergangs aufzubauen.

12. Spannungswandlerschaltung (10) gemäß einem der Ansprüche 1 bis 11, wobei die Spannungswandlerschaltung (10) zum getakteten Wandeln der Eingangsspannung (VDD), die an dem Eingang (14) des Spannungswandlers anliegt, in eine Ausgangsspannung, die an einem Ausgang des Spannungswandlers zur Verfügung steht, ausgelegt ist; wobei der Energiespeicher (12) eine erste Spule aufweist, wobei ein Anschluss der Spule mit dem Eingang (14) des Spannungswandlers gekoppelt ist;
wobei die Spannungswandlerschaltung ein ansteuerbares Gleichrichtungselement (29) aufweist, das in Reihe mit der ersten Spule (12) geschaltet ist;
wobei die Spannungswandlerschaltung einen Ausgangskondensator (28) aufweist, der mit dem steuerbaren Gleichrichtungselement (29) verschaltet ist, und der ausgelegt ist um eine Ladung zu speichern, so dass an dem Ausgangskondensator (28) eine Ausgangsspannung (Vout)zur Verfügung steht; und
wobei die Rückkopplungsschaltung (20) ausgebildet ist, um in Abhängigkeit von einer Änderung der in der ersten Spule (12) gespeicherten Energie oder in Abhängigkeit von einer Menge der in der ersten Spule gespeicherten Energie das Rückkopplungssignal bereitzustellen,
wobei die Schalteranordnung (15) ausgelegt ist, um die erste Spule mit einem Referenzpotential (VSS) zu koppeln, um der ersten Spule eine Energie zuzuführen;
wobei die Schalteranordnung einen ersten Transistor (13) und einen zweiten Transistor (17) aufweist, die zueinander parallel geschaltet sind;
wobei der erste Transistor (13) eine betragsmäßig kleinere Schwellspannung aufweist, als der zweite Transistor;
wobei ein Steueranschluss (13a) des ersten Transistors so beschaltet ist, dass der erste Transistor in einer Startphase des Spannungswandlers aktiv ist, um eine Kopplung der ersten Spule (12) mit dem Referenzpotential (VSS) zu ermöglichen, um einen Stromfluss durch die erste Spule aufzubauen;
wobei die Rückkopplungsschaltung (20) ein schaltbares kapazitives Element aufweist, das ausgelegt ist, um das Rückkopplungssignal zu dem Steueranschluss (17a) eines zweiten Schalters (17) zu koppeln,
wobei das schaltbare kapazitive Element ausgelegt ist, um in einer Startphase eine stärkere Kopplungswirkung bereitzustellen als nach der Startphase,
wobei ein Steueranschluss (17a) des zweiten Transistors (17) so beschaltet ist, dass der zweite Transistor (17) nach der Startphase eine getaktete Kopplung der ersten Spule (12) mit dem Referenzpotential (VSS) ermöglicht; und
wobei das angesteuerte Gleichrichterelement ausgelegt ist, um Ladungen von der ersten Spule (12) auf den Ausgangskondensator (28) zu übertragen, wenn die Schalteranordnung ausgeschaltet ist.

13. Die Spannungswandlerschaltung gemäß Anspruch 12,
wobei die Rückkopplungsschaltung eine zweite Spule (L₂) und eine dritte Spule (L₃) aufweist, die mit der ersten Spule (12) induktiv gekoppelt sind,
wobei ein Abgriff (22a) zwischen der zweiten Spule und der dritten Spule mit parallel geschalteten Kapazitäten (C₃, C₄) verbunden ist,
wobei eine der Kapazitäten über einen Kapazitätsumschaltungs-Sperrschicht-Feldeffekt-Transistor (JFET) schaltbar ist,
wobei ein Anschluss der dritten Spule mit dem Steueranschluss des ersten Transistors und mit einem Steueranschluss des Kapazitätsumschaltungs-Sperrschicht-Feldeffekt-Transistors gekoppelt ist; und
wobei ein Anschluss der zweiten Spule über ein Widerstands-Kapazitäts-Glied (C₂, R₂) mit einem Referenzpotential (VSS) gekoppelt ist,
wobei die beiden parallel geschalteten Kapazitäten (C₃, C₄) ausgelegt sind, um in der Startphase eine stärkere Kopplung zwischen dem Abgriff und dem Steueranschluss des zweiten Transistors zu bewirken als nach der Startphase, um ein Rückkopplungssignal von dem Abgriff zu dem Steueranschluss (17a) des zweiten Transistors (17) zu koppeln.

14. Ein Verfahren zum getakteten Zuführen von Energie zu einem Energiespeicher (12), basierend auf einer Eingangsspannung (VDD), die an einem Eingang (14) einer Spannungswandlerschaltung (10) anliegt, mit folgenden Schritten:
Zuführen (80) von Energie zu dem Energiespeicher der Spannungswandlerschaltung in einer Startphase durch Aktivieren eines ersten Schalters; und
Zuführen (85) von Energie in getakteter Weise zu dem Energiespeicher der Spannungswandlerschaltung durch Aktivieren eines zweiten Schalters, wobei das Aktivieren des zweiten Schalters in der Startphase ein Koppeln eines Rückkopplungssignals zu dem Steueranschluss des zweiten Schalters über eine Kopplung umfasst, und wobei das Verfahren ein Verringern der Kopplung nach der Startphase umfasst, wobei der zweite Schalter zu dem ersten Schalter parallel geschaltet ist, und der zweite Schalter eine betragsmäßig größere Einschaltspannung aufweist, als der erste Schalter.

## Claims

1. A voltage converter circuit (10) for a clocked supply of energy to an energy storage (12) based on an input voltage (VDD) applied at an input (14) of the voltage converter circuit, comprising:
an energy storage (12);
a switch arrangement (15),
wherein the switch arrangement comprises a first switch (13) and a second switch (17) which are connected in parallel,
wherein the switch arrangement is coupled to the energy storage,
wherein the first switch comprises a turn-on voltage which is smaller, according to amount, than the second switch,
wherein a control terminal (13a) of the first switch (13) is wired up such that the first switch is active in a startup phase of the voltage converter circuit to supply energy to the energy storage, and
wherein a control terminal (17a) of the second switch is wired up such that the second switch (17) is active after the startup phase to supply energy to the energy storage (12) in a clocked way; and
a feedback circuit (20) which is implemented to provide a feedback signal depending on a change of the energy stored in the energy storage (12) or depending on an amount of energy stored in the energy storage,
wherein the feedback circuit (20) comprises a switchable coupling element (24) which is implemented to couple the feedback signal to the control terminal (17a) of the second switch,
wherein the switchable coupling element (24) is implemented to provide a stronger coupling effect in a startup phase than after the startup phase.

2. The voltage converter circuit (10) according to claim 1, wherein the energy storage is a coil;
wherein the feedback circuit comprises an inductive element (22) magnetically coupled to the coil so that, by a change in the energy stored in the coil, a voltage is induced in the inductive element.
wherein the feedback circuit (20) being the switchable coupling element (24) comprises a switchable capacitive element (24) which is implemented to couple the voltage induced in the inductive element to the control terminal (17a) of the second switch.

3. The voltage converter circuit (10) according to claim 2, wherein the switchable, capacitive element comprises a third switch (24b) which is wired up such that the switchable, capacitive element provides a stronger coupling effect in the startup phase than after the startup phase.

4. The voltage converter circuit (10) according to claim 3,
wherein the third switch (24b) is implemented as a junction field effect transistor whose control terminal (24b') is coupled to the energy storage (12) such that the third switch is active in the startup phase to cause a stronger coupling than after the startup phase.

5. The voltage converter circuit (10) according to one of claims 3 or 4, wherein the third switch (24b) is wired up such that a coupling effect of the switchable, capacitive element onto the control terminal (17a) of the second transistor (17) is periodically changed during the startup phase.

6. The voltage converter circuit (10) according to one of claims 3 to 5, wherein the voltage converter circuit (10) further comprises a capacitive element (26) which is implemented to build up a potential depending on a change of the energy in the energy storage or the amount of energy in the energy storage, wherein the potential works towards switching off the third switch (24b).

7. The voltage converter circuit (10) according to one of claims 3 to 6, wherein the third switch (24b) comprises a rectifying junction transition from a control terminal to a load path terminal; and
wherein the voltage converter circuit further comprises a capacitive element (26) which is implemented to build up a potential which works towards switching off the third switch using a rectifying effect of the junction transition of the third switch (24b), or which is implemented to build up the potential working towards switching off the third switch (24b) using a rectifying effect of a junction transition of the first transistor.

8. The voltage converter circuit (10) according to one of the preceding claims, wherein the feedback circuit is implemented to control the control terminal of the first switch;
wherein the feedback circuit is implemented to control, in a startup phase, the control terminal (13a) of the first switch (13) coupled to the inductive element (22) such that energy is supplied to the coil (12) through the first switch; and
wherein the feedback circuit is implemented to build up a potential during the startup phase by a voltage induced in the inductive element, the potential working towards switching off the first switch.

9. The voltage converter circuit (10) according to one of the preceding claims, wherein the feedback circuit is implemented to control the first switch in the startup phase such that a supply of energy to the coil is periodically interrupted by the first switch, and
wherein the feedback circuit is implemented to build up the potential during the startup phase which works towards switching off the first switch such that a periodic switching on and off of the first switch is prevented.

10. The voltage converter circuit (10) according to one of the preceding claims, wherein the feedback circuit comprises a capacitive element (26) which is coupled to the inductive element (22),
wherein the voltage converter circuit is implemented to load the capacitive element (26) to a steady component so that after the startup phase a potential is applied to the capacitive element (26) which ends the supply of energy to the coil (12) with the first switch.

11. The voltage converter circuit (10) according to one of the preceding claims, wherein the first switch comprises a rectifying junction transition from a control terminal to a load path terminal; and
wherein the feedback circuit is implemented to build up the potential working towards switching off the first switch using a rectifying effect of the junction transition.

12. The voltage converter circuit (10) according to one of claims 1 to 11, the voltage converter circuit (10) being implemented for the clocked conversion of the input voltage (VDD) applied at the input (14) of the voltage converter into an output voltage available at an output of the voltage converter:
wherein the energy storage (12) comprises a first coil (12), wherein a terminal of the coil is coupled to the input (14) of the voltage converter;
wherein the voltage converter circuit comprises a controllable rectifying element (29) connected in series with the first coil (12);
wherein the voltage converter circuit comprises an output capacitor (28) interconnected with the controllable rectifying element (29) and implemented to store a charge so that at the output capacitor (28) an output voltage (Vₒᵤₜ) is available; and
wherein the feedback circuit (20) is implemented to provide the feedback signal depending on a change of the energy stored in the first coil (12) or depending on an amount of energy stored in the first coil,
wherein the switch arrangement (15) is implemented to couple the first coil to a reference potential (VSS) to supply energy to the first coil;
wherein the switch arrangement comprises a first transistor (13) and a second transistor (17) connected in parallel to each other;
wherein the first transistor (13) comprises a smaller threshold voltage than the second transistor, according to amount;
wherein a control terminal (13a) of the first transistor is wired up such that the first transistor is active in a startup phase of the voltage converter to enable a coupling of the first coil (12) to the reference potential (VSS) to build up a current flow through the first coil;
wherein the feedback circuit (20) comprises a switchable capacitive element which is implemented to couple the feedback signal to the control terminal (17a) of a second switch (17),
wherein the switchable capacitive element is implemented to provide a stronger coupling effect in a startup phase than after the startup phase,
wherein a control terminal (17a) of the second transistor (17) is wired up such that the second transistor (17) enables a clocked coupling of the first coil (12) to the reference potential (VSS) after the startup phase; and
wherein the controlled rectifier element is implemented to transmit charges from the first coil (12) to the output capacitor (28) when the switch arrangement is switched off.

13. The voltage converter circuit according to claim 12,
wherein the feedback circuit comprises a second coil (L₂) and a third coil (L₃) which are inductively coupled to the first coil (12),
wherein a tap (22a) between the second coil and the third coil is connected to capacities (C₃, C₄) which are connected in parallel,
wherein one of the capacities is switchable via a capacity changeover junction field effect transistor (JFET),
wherein a terminal of the third coil is coupled to the control terminal of the first transistor and to a control terminal of the capacity changeover junction field effect transistor; and
wherein a terminal of the second coil is coupled via a resistor/capacity element (C₂, R₂) to a reference potential (VSS),
wherein the two capacities (C₃, C₄) connected in parallel are implemented to cause a stronger coupling between the tap and the control terminal of the second transistor in the startup phase than after the startup phase, to couple a feedback signal from the tap to the control terminal (17a) of the second transistor (17).

14. A method for a clocked supply of energy to an energy storage (12), based on an input voltage (VDD) applied at an input (14) of a voltage converter circuit (10), comprising:
supplying (80) energy to the energy storage of the voltage converter circuit in a startup phase by activating a first switch; and
supplying (85) energy in a clocked way to the energy storage of the voltage converter circuit by activating a second switch, wherein activating the second switch in the startup phase includes coupling a feedback signal to the control terminal of the second switch via a coupling, and wherein the method includes a reduction of the coupling after the startup phase, wherein the second switch is connected in parallel to the first switch and the second switch comprises a higher turn-on voltage than the first switch, according to amount.

## Revendications

1. Circuit transformateur de tension (10) pour l'alimentation cadencée d'énergie vers un accumulateur d'énergie (12) sur base d'une tension d'entrée (VDD) présente à une entrée (14) du circuit transformateur de tension, aux caractéristiques suivantes:
un accumulateur d'énergie (12);
un aménagement de commutateurs (15),
dans lequel l'aménagement de commutateurs présente un premier commutateur (13) et un deuxième commutateur (17) qui sont connectés en parallèle entre eux,
dans lequel l'aménagement de commutateurs est couplé à l'accumulateur d'énergie,
dans lequel le premier commutateur présente une tension d'enclenchement plus petite que le deuxième commutateur,
dans lequel une borne de commande (13a) du premier commutateur (13) est câblée de sorte que le premier commutateur soit actif dans une phase de démarrage du circuit transformateur de tension pour amener de l'énergie vers l'accumulateur d'énergie, et
dans lequel une borne de commande (17a) du deuxième commutateur est câblée de sorte que le deuxième commutateur (17) soit actif après la phase de démarrage, pour amener de l'énergie de manière cadencée vers l'accumulateur d'énergie (12); et
un circuit de couplage rétroactif (20) qui est conçu pour mettre à disposition un signal de couplage rétroactif en fonction d'une variation de l'énergie accumulée dans l'accumulateur d'énergie (12) ou en fonction d'une quantité d'énergie accumulée dans l'accumulateur d'énergie,
dans lequel le circuit de couplage rétroactif (20) présente un élément de couplage commutable (24) qui est conçu pour coupler le signal de couplage rétroactif à la borne de commande (17a) du deuxième commutateur,
dans lequel l'élément de couplage commutable (24) est conçu pour mettre à disposition, dans une phase de démarrage, un effet de couplage plus fort qu'après la phase de démarrage.

2. Circuit transformateur de tension (10) selon la revendication 1, dans lequel l'accumulateur d'énergie est une bobine;
dans lequel le circuit de couplage rétroactif présente un élément inductif (22) qui est couplé magnétiquement à la bobine, de sorte que par une variation de l'énergie accumulée dans la bobine soit induite une tension dans l'élément inductif (22);
dans lequel le circuit de couplage rétroactif (20) présente comme élément de couplage commutable (24) un élément capacitif commutable qui est conçu pour coupler la tension induite dans l'élément inductif à la borne de commande (17a) du deuxième commutateur.

3. Circuit transformateur de tension (10) selon la revendication 2, dans lequel l'élément capacitif commutable présente un troisième commutateur (24b) qui est câblé de sorte que l'élément capacitif commutable mette à disposition, dans la phase de démarrage, un effet de couplage plus fort qu'après la phase de démarrage.

4. Circuit transformateur de tension (10) selon la revendication 3,
dans lequel le troisième commutateur (24b) est conçu comme transistor à effet de champ à jonctions dont la borne de commande (24b) est couplée à l'accumulateur d'énergie (12) de sorte que le troisième commutateur soit actif dans la phase de démarrage, pour provoquer un couplage plus fort qu'après la phase de démarrage.

5. Circuit transformateur de tension (10) selon l'une des revendications 3 ou 4, dans lequel le troisième commutateur (24b) est câblé de sorte qu'un effet de couplage de l'élément capacitif commutable sur la borne de commande (17a) du deuxième transistor (17) pendant la phase de démarrage soit varié périodiquement.

6. Circuit transformateur de tension (10) selon l'une des revendications 3 à 5, dans lequel le circuit transformateur de tension (10) présente par ailleurs un élément capacitif (26) qui est conçu pour construire, en fonction d'une variation de l'énergie dans l'accumulateur d'énergie ou de la quantité d'énergie dans l'accumulateur d'énergie, un potentiel qui réagit à une désactivation du troisième commutateur (24b).

7. Circuit transformateur de tension (10) selon l'une des revendications 3 à 6, dans lequel le troisième commutateur (24b) présente une transition de couche barrière de redressement d'une borne de commande à une borne de trajectoire de charge; et dans lequel le circuit transformateur de tension présente par ailleurs un élément capacitif (26) qui est conçu pour construire un potentiel qui réagit à une désactivation du troisième commutateur à l'aide d'un effet de redressement de la transition de couche barrière du troisième commutateur (24b), ou qui est conçu pour construire le potentiel qui réagit à une désactivation du troisième commutateur (24b) à l'aide d'un effet de redressement d'une transition de couche barrière du premier transistor.

8. Circuit transformateur de tension (10) selon l'une des revendications précédentes, dans lequel le circuit de couplage rétroactif est conçu pour activer la borne du premier commutateur;
dans lequel le circuit de couplage réactif est conçu pour activer, dans une phase de démarrage, la borne de commande (13a) du premier commutateur (13) couplé à l'élément inductif (22) de sorte que de l'énergie soit alimentée vers la bobine (12) par le premier commutateur; et
dans lequel le circuit de couplage rétroactif est conçu pour construire pendant la phase de démarrage, par une tension induite dans l'élément inductif, un potentiel qui réagit à une désactivation du premier commutateur.

9. Circuit transformateur de tension (10) selon l'une des revendications précédentes, dans lequel le circuit de couplage rétroactif est conçu pour activer, dans la phase de démarrage, le premier commutateur de sorte que soit interrompue périodiquement une alimentation d'énergie vers la bobine par le premier commutateur, et
dans lequel le circuit de couplage rétroactif est conçu pour construire, pendant la phase de démarrage, le potentiel qui réagit à une désactivation du premier commutateur de sorte que soit empêchée une activation et désactivation périodique du premier commutateur.

10. Circuit transformateur de tension (10) selon l'une des revendications précédentes, dans lequel le circuit de couplage rétroactif présente un élément capacitif (26) qui est couplé à l'élément inductif (22),
dans lequel le circuit transformateur de tension est conçu pour charger l'élément capacitif (26) à une composante continue, de sorte que soit présent à l'élément capacitif (26), après la phase de démarrage, un potentiel qui met fin à l'alimentation d'énergie vers la bobine (12) par le premier commutateur.

11. Circuit transformateur de tension (10) selon l'une des revendications précédentes, dans lequel le premier commutateur présente une transition de couche barrière de redressement d'une borne de commande à une borne de trajectoire de charge; et dans lequel le circuit de couplage rétroactif est conçu pour construire le potentiel qui réagit à une désactivation du premier commutateur à l'aide d'un effet de redressement de la transition de la couche barrière.

12. Circuit transformateur de tension (10) selon l'une des revendications 1 à 11, dans lequel le circuit transformateur de tension (10) est conçu pour transformer de manière cadencée la tension d'entrée (VDD) présente à l'entrée (14) du transformateur de tension en une tension de sortie disponible à une sortie du transformateur de tension;
dans lequel l'accumulateur d'énergie (12) présente une première bobine, une borne de la bobine étant couplée à l'entrée (14) du transformateur de tension;
dans lequel le circuit transformateur de tension présente un élément redresseur activable (29) qui est connecté en série avec la première bobine (12);
dans lequel le circuit transformateur de tension présente un condensateur de sortie (28) qui est connecté à l'élément redresseur activable (29) et qui est conçu pour accumuler une charge, de sorte qu'au condensateur de sortie (28) soit disponible une tension de sortie (Vout); et
dans lequel le circuit de couplage rétroactif (20) est conçu pour mettre à disposition le signal de couplage rétroactif en fonction d'une variation de l'énergie accumulée dans la première bobine (12) ou en fonction d'une quantité d'énergie accumulée dans la première bobine,
dans lequel l'aménagement de commutateurs (15) est conçu pour coupler la première bobine à un potentiel de référence (VSS) pour alimenter une énergie vers la première bobine;
dans lequel l'aménagement de commutateurs présente un premier transistor (13) et un deuxième transistor (17) qui sont connectés en parallèle entre eux;
dans lequel le premier transistor (13) présente une tension de seuil inférieure à celle du deuxième transistor;
dans lequel une borne de commande (13a) du premier transistor est câblée de sorte que le premier transistor soit actif dans une phase de démarrage du transformateur de tension, pour permettre un couplage de la première bobine (12) au potentiel de référence (VSS) pour construire un flux de courant à travers la première bobine;
dans lequel le circuit de couplage rétroactif (20) présente un élément capacitif qui est conçu pour coupler le signal de couplage rétroactif à la borne de commande (17a) du deuxième commutateur (17),
dans lequel l'élément capacitif commutable est conçu pour mettre à disposition, dans une phase de démarrage, un effet de couplage plus fort qu'après la phase de démarrage,
dans lequel une borne de commande (17a) du deuxième transistor (17) est câblée de sorte que le deuxième transistor (17) permette, après la phase de démarrage, un couplage cadencé de la première bobine (12) au potentiel de référence (VSS); et
dans lequel l'élément redresseur activé est conçu pour transférer des charges de la première bobine (12) au condensateur de sortie (28) lorsque l'aménagement de commutateurs est désactivé.

13. Circuit transformateur de tension selon la revendication 12,
dans lequel le circuit de couplage rétroactif présente une deuxième bobine (L₂) et une troisième bobine (L₃) couplées de manière inductive à la première bobine (12),
dans lequel un prélèvement (22a) est connecté entre la deuxième bobine et la troisième bobine à capacités (C₃, C₄) connectées en parallèle,
dans lequel l'une des capacités est commutable par l'intermédiaire d'un transistor à effet de champ à jonctions à commutation de capacité (JFET),
dans lequel une borne de la troisième bobine est couplée à la borne de commande du premier transistor et à une borne de commande du transistor à effet de champ à jonctions à commutation de capacité; et
dans lequel une borne de la deuxième bobine est couplée par l'intermédiaire d'un élément de capacité de résistance (C₂, R₂) à un potentiel de référence (VSS),
dans lequel les deux capacités connectées en parallèle (C₃, C₄) sont conçues pour entraîner, dans la phase de démarrage, un couplage plus fort entre le prélèvement et la borne de commande du deuxième transistor qu'après la phase de démarrage, pour coupler un signal de couplage rétroactif du prélèvement à la borne de commande (17a) du deuxième transistor (17).

14. Procédé pour l'alimentation cadencée d'énergie vers un accumulateur d'énergie (12) sur base d'une tension d'entrée (VDD) qui est présente à une entrée (14) d'un circuit transformateur de tension (10), aux étapes suivantes consistant à:
amener (80) de l'énergie vers l'accumulateur d'énergie du circuit transformateur de tension dans une phase de démarrage en activant un premier commutateur; et
amener (85) de l'énergie de manière cadencée vers l'accumulateur d'énergie du circuit transformateur de tension en actionnant un deuxième commutateur, l'activation du deuxième commutateur dans la phase de démarrage comprenant un couplage d'un signal de couplage rétroactif à la borne de commande du deuxième commutateur par l'intermédiaire d'un couplage, et le procédé comprenant une réduction du couplage après la phase de démarrage, le deuxième commutateur étant connecté en parallèle avec le premier commutateur et le deuxième commutateur présentant une tension d'activation plus grande que le premier commutateur.
